# EUROPEAN PATENT APPLICATION

(11) **EP 4 801 017 A1**
(43) Date of publication of application: **02.09.2026**
(21) Application number: 24894502.4
(22) Date of filing: 13.11.2024
(51) Int. Cl.: H04L 69/00, H04L 69/32, H04L 67/14

(54) **METHOD AND APPARATUS FOR MANAGING SESSION BY USING QUIC PROTOCOL IN WIRELESS COMMUNICATION SYSTEM**

(30) Priority: 23.11.2023 KR 20230164356
(71) Applicant: Samsung Electronics Co., Ltd., Suwon-si, Gyeonggi-do 16677 (KR)
(72) Inventor: LIM, Jeonga, Suwon-si, Gyeonggi-do 16677 (KR); KOO, Youngdae, Suwon-si, Gyeonggi-do 16677 (KR); GU, Jaheon, Suwon-si, Gyeonggi-do 16677 (KR); CHO, Sunwoo, Suwon-si, Gyeonggi-do 16677 (KR); CHA, Jiyoung, Suwon-si, Gyeonggi-do 16677 (KR); CHOI, Jinho, Suwon-si, Gyeonggi-do 16677 (KR)
(74) Representative: Gulde & Partner
(86) International application number: PCT/KR2024/017912
(87) International publication number: WO 2025/110609

(57) **Abstract**

The present disclosure relates to a 5G or 6G communication system for supporting a higher data transmission rate than that of a 4G communication system such as LTE. A method by which an SMF entity uses a QUIC connection for PDU session establishment in a wireless communication system according to the present disclosure may comprise the steps of: transmitting, to a UPF entity, an N4 session establishment request message; receiving an N4 session establishment response message from the UPF entity in response to the N4 session establishment request message; transmitting, to a base station through an AMF entity, first N2 information based on the N4 session establishment response message; receiving second N2 information from the base station through the AMF entity; and performing communication by using a QUIC connection. Various other embodiments identified through the specification are possible.

## Description

### [Technical Field]

The disclosure relates to a wireless communication system and, more particularly, to a method and an apparatus for managing a PDU session by using a quick user datagram protocol (UDP) internet connection (QUIC) protocol in a wireless communication system.

### [Background Art]

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable superhigh-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

Meanwhile, applications utilized in 6G communication systems include extended reality (XR), virtual reality (VR), and the metaverse, which require high data rates, low latency, and high reliability. Since these applications exhibit significant differences in traffic characteristics compared to conventional voice or streaming traffic processing, management for each traffic type is required.

Furthermore, the network architecture of 6G communication systems is being considered as a fully cloud-native system, and high throughput and low-latency communication performance can be secured by leveraging the abundant resources within the full cloud-native architecture. However, such cloud environments carry the risk of communication system blackouts caused by traffic congestion, errors, or defects, which may prevent the system from performing as intended, thus, there is a demand for networks that can guarantee seamless connectivity to meet user expectations.

Accordingly, there have been ongoing discussions regarding protocols applicable to the user plane in 6G communication systems to enable granular management of data traffic and provide high data rates, thereby ensuring that applications operate smoothly without interruption.

### [Disclosure of Invention]

### [Technical Problem]

Various embodiments of the disclosure provide a method and an apparatus for managing a session by using a QUIC protocol in a wireless communication system for high-speed and low-latency data traffic transmission and reception.

### [Solution to Problem]

According to various embodiments of the disclosure, a method using a quick user datagram protocol internet connection (QUIC) connection to establish a PDU session by a session management function (SMF) entity in a wireless communication system may include transmitting an N4 session establishment request message to a user plane function (UPF) entity, receiving an N4 session establishment response message from the UPF entity in response to the N4 session establishment request message, transmitting first N2 information based on the N4 session establishment response message to a base station through an access and mobility management function (AMF) entity, receiving second N2 information from the base station through the AMF entity, and performing communication by using the QUIC connection, wherein the first N2 information includes at least one of information on a number of streams to be included in the QUIC connection, a mapping rule of a stream identifier (ID) and a quality of service flow identifier (QFI), and a UPF connection ID.

According to various embodiments of the disclosure, a method performed by a user plane function (UPF) entity in a wireless communication system may include receiving an N4 session establishment request message from a session management function (SMF) entity and transmitting an N4 session establishment response message to the SMF entity in response to the N4 session establishment request message, wherein the N4 session establishment request message is based on an SM policy updated by the SMF entity for a QUIC connection and wherein the N4 session establishment response message includes a UPF connection ID.

According to various embodiments of the disclosure, a session management function (SMF) entity using a quick user datagram protocol internet connection (QUIC) connection to establish a PDU session in a wireless communication system may include a transceiver and a controller connected to the transceiver, wherein the controller is configured to transmit an N4 session establishment request message to a user plane function (UPF) entity, receive an N4 session establishment response message from the UPF entity in response to the N4 session establishment request message, transmit first N2 information based on the N4 session establishment response message to a base station through an access and mobility management function (AMF) entity, receive second N2 information from the base station through the AMF entity, and perform communication by using the QUIC connection, wherein the first N2 information includes at least one of information on a number of streams to be included in the QUIC connection, a mapping rule of a stream identifier (ID) and a quality of service flow identifier (QFI), and a UPF connection ID.

According to various embodiments of the disclosure, a user plane function (UPF) entity in a wireless communication system may include a transceiver and a controller connected to the transceiver, wherein the controller is configured to receive an N4 session establishment request message from a session management function (SMF) entity and transmit an N4 session establishment response message to the SMF entity in response to the N4 session establishment request message, wherein the N4 session establishment request message is based on an SM policy updated by the SMF entity for a QUIC connection, and wherein the N4 session establishment response message includes a UPF connection ID.

### [Brief Description of Drawings]

FIG. 1 illustrates a protocol stack structure of a user plane including a quick user datagram protocol (UDP) internet connection (QUIC) protocol according to an embodiment of the disclosure.
FIG. 2 illustrates a header of a QUIC protocol and a message format according to an embodiment of the disclosure.
FIG. 3 illustrates an example of performing communication using a QUIC protocol according to an embodiment of the disclosure.
FIG. 4 illustrates a method of operating a packet data unit (PDU) session by using a QUIC protocol according to an embodiment of the disclosure.
FIG. 5 illustrates an operation of establishing a PDU session according to an embodiment of the disclosure.
FIG. 6 illustrates an operation of establishing a PDU session according to an embodiment of the disclosure.
FIG. 7 illustrates an operation of establishing a PDU session according to an embodiment of the disclosure.
FIG. 8 illustrates an operation of establishing a PDU session according to an embodiment of the disclosure.
FIG. 9 illustrates an operation of establishing a PDU session according to an embodiment of the disclosure.
FIG. 10 illustrates an operation of establishing a PDU session according to an embodiment of the disclosure.
FIG. 11 illustrates an operation of establishing a PDU session according to an embodiment of the disclosure.
FIG. 12 illustrates an operation of establishing a PDU session according to an embodiment of the disclosure.
FIG. 13 illustrates an operation of establishing a PDU session according to an embodiment of the disclosure.
FIG. 14 illustrates an operation of releasing a PDU session according to an embodiment of the disclosure.
FIG. 15 illustrates an operation of modifying a PDU session according to an embodiment of the disclosure.
FIG. 16 illustrates an operation for establishing a PDU session by a session management function (SMF) entity according to an embodiment of the disclosure.
FIG. 17 illustrates a structure of a base station according to an embodiment of the disclosure.
FIG. 18 illustrates a structure of a UE according to an embodiment of the disclosure.
FIG. 19 illustrates a structure of a core network entity according to an embodiment of the disclosure.

With regard to the description of the drawings, the same or like reference signs may be used to designate the same or like elements.

### [Mode for the Invention]

Various aspects of the claimed subject matter are now described with reference to the drawings, wherein like reference numerals are used to refer to like elements throughout. In the following description, for purposes of explanation, numerous specific details are set forth in order to provide a thorough understanding of one or more aspects. It may be apparent, however, that such aspect(s) may be practiced without these specific details.

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

In the following description, terms referring to signals (e.g., message, signal, signaling, sequence, and stream), terms referring to resources (e.g., symbol, slot, subframe, radio frame (RF), subcarrier, resource element (RE), resource block (RB), bandwidth part (BWP), and occasion), terms for operations (e.g., step, method, process, and procedure), terms referring to data (e.g., information, parameter, variable, value, bit, symbol, and codeword), terms referring to channels, terms referring to control information (e.g., downlink control information (DCI), medium access control codeword element (MAC CE), and radio access control (RRC) signaling), terms referring to network entities, terms referring to device elements, and the like are illustratively used for the sake of convenience. Therefore, the disclosure is not limited by the terms as described below, and other terms referring to subjects having equivalent technical meanings may be used.

Various embodiments of the disclosure are described herein in connection with a wireless terminal and/or a base station. A wireless terminal may refer to a device providing voice and/or data connectivity to a user. The wireless terminal may be connected to a computing device such as a laptop computer or desktop computer, or it can be a self - contained device such as a personal digital assistant (PDA). The wireless terminal may also be called a system, a subscriber unit, a subscriber station, mobile station, mobile, remote station, access point, remote terminal, access terminal, user terminal, user agent, user device, or user equipment. A wireless terminal may be a subscriber station, a wireless device, a cellular telephone, a PCS telephone, a cordless telephone, a session initiation protocol (SIP) phone, a wireless local loop (WLL) station, a personal digital assistant (PDA), a handheld device having wireless connection capability, or other processing device connected to a wireless modem. A base station (e.g., access point) may refer to a device in an access network that communicates over the air-interface, through one or more sectors, with wireless terminals. The base station may act as a router between the wireless terminal and the rest of the access network, which can include an Internet Protocol (IP) network, by converting received air-interface frames to IP packets. The base station also coordinates management of attributes for the air interface.

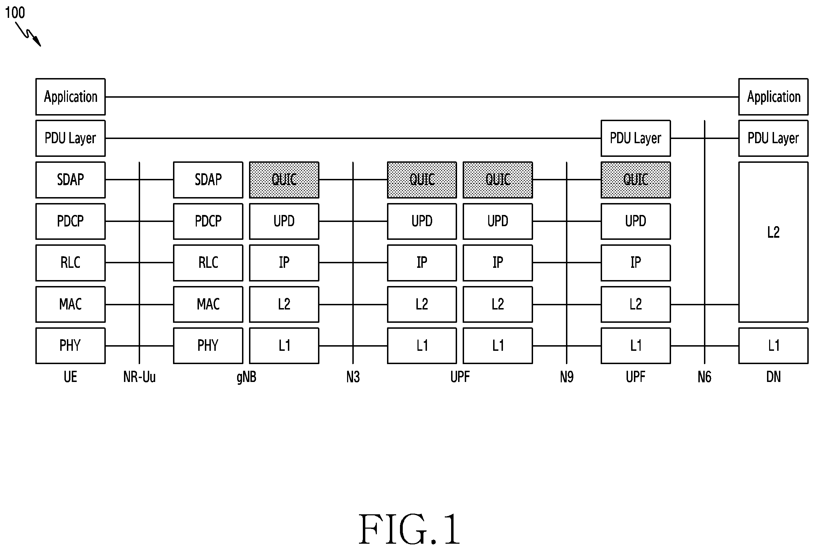

FIG. 1 illustrates a protocol stack structure of a user plane including a quick user datagram protocol (UDP) internet connection (QUIC) protocol according to an embodiment of the disclosure.

In current 5G communication systems, a general packet radio service (GPRS) tunneling protocol-U (GTP-U) protocol based on a user datagram protocol (UDP) is used as the protocol of the user plane. The GTP-U protocol supports tunneling of user data through the N3 interface between a gNB and a UPF and the N9 interface between a UPF and a different UPF in a backbone network. The GTP-U protocol has a fast transmission speed because there is no logical connection setup process, but address information should be configured whenever datagram is transmitted. In addition, the UDP-based GTP-U protocol does not perform flow control, error control, or congestion control of data, and thus may cause data loss during data transmission and reception. That is, a UDP in a user plane protocol based on the GTP-U protocol may be capable of transmitting and receiving data at a fast speed, but may have a problem in that it is difficult to guarantee a seamless connection, which is important in a mobile environment.

According to an embodiment, instead of the GTP-U protocol, the QUIC protocol may be used to configure a PDU session. The user plane protocol stack including the GTP-U protocol may not include new unique information of the new protocol. In order to operate a PDU session by using a new protocol, it is necessary to change the protocol stack structure of the user plane. Accordingly, the disclosure proposes a QUIC protocol which is a new protocol as the protocol of the user plane protocol capable of reducing data transmission and reception and enabling low-latency data transmission.

Referring to FIG. 1, the protocol stack structure of user plane according to the disclosure may include a QUIC protocol in a protocol stack associated with the N3 interface and the N9 interface. For example, in the protocol stack of the user plane used in a communication system, the GTP-U protocol may be replaced with the QUIC protocol to configure a PDU session.

In an example, the protocol stack structure of the user plane in which the GTP-U protocol is changed to the QUIC protocol may be used in a 6G communication system network. Compared to the GTP-U protocol, the QUIC protocol can manage a PDU session as multiple streams, so that even if a delay or loss of data transmission and reception occurs in one stream, data transmission and reception may normally occur in other streams. Accordingly, a network using the QUIC protocol may be used when an application of the 6G communication system requiring low latency and a high data rate is operated.

In the disclosure, communication may be performed using a PDU session using the QUIC protocol. The PDU session using the QUIC protocol may be called a QUIC connection. Hereinafter, for the sake of description, a PDU session using a QUIC protocol and a QUIC connection are used interchangeably.

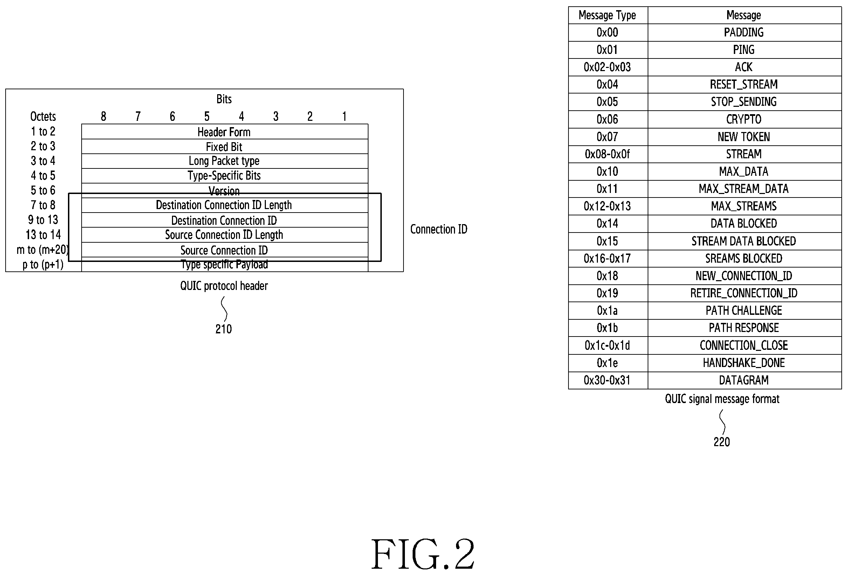

FIG. 2 illustrates a header of a QUIC protocol and a message format according to an embodiment of the disclosure.

In the existing 5G communication system, the PDU session of the user plane has been configured based on the GTP-U protocol. The GTP-U protocol-based PDU session has operated using a tunnel endpoint identifier (TEID) message field, and thus the protocol stack of the user plane based on the GTP-U protocol cannot include new unique information (e.g., a connection ID, a stream ID, etc.) of a new protocol. Accordingly, in order to operate a PDU session by using the QUIC protocol, not only the protocol stack structure of the user plane but also a header format and message format used by the QUIC protocol may be additionally defined.

Referring to FIG. 2, a header 210 of the QUIC protocol is illustrated. The header 210 of the QUIC protocol may include identifiers used by the QUIC protocol. Specifically, the header 210 of the QUIC protocol may include information related to a connection ID (e.g., gNB connection ID or UPF connection ID) used when a message is transmitted and received. In an example, the connection ID may be unique information included in the QUIC protocol.

Although the GTP-U protocol may transmit and receive messages by using a TEID in the header of the GTP-U protocol, the QUIC protocol may transmit and receive messages by using a connection ID. Accordingly, the header of the QUIC protocol in FIG. 2 may include information related to the connection ID instead of the TEID.

Specifically, the destination connection ID length may include information indicating the length of the destination connection ID, the destination connection ID may include information on the destination ID, the source connection ID length may include information indicating the length of the source connection ID, and the source connection ID may include information on the source ID. However, the disclosure is not limited to the example.

In addition, the QUIC protocol header may include a header form, a fixed bit, a long packet type bit, type-specific bits, a version field, and the like, which are well known to those skilled in the art, and thus a detailed description thereof will be omitted.

Furthermore, the QUIC protocol header may include more fields or fewer fields than the fields illustrated in FIG. 2, and the length, size, etc. may be different from those illustrated in FIG. 2.

Referring to FIG. 2, QUIC signaling message formats 220 are illustrated. In FIG. 2, various QUIC signaling message formats 220, such as a signaling message for padding, a signaling message for PING, ACK, or the like, are illustrated in a table form, and the QUIC signaling message format 220 represents a signaling message format for operations of the QUIC protocol.

According to an embodiment of the disclosure, the QUIC signaling message format 220 may include a message format associated with a stream ID that indicates a characteristic of the QUIC protocol. In an example, the stream ID may be unique information included in the QUIC protocol. With respect to the remaining QUIC signaling message formats 220, the names of the message formats described in FIG. 2 are apparent, and thus a detailed description thereof will be omitted.

According to an embodiment, when QUIC protocol header 210 and the QUIC signaling message format 220 are defined for the N3 interface and the N9 interface, the communication system may configure a PDU session by using the QUIC protocol.

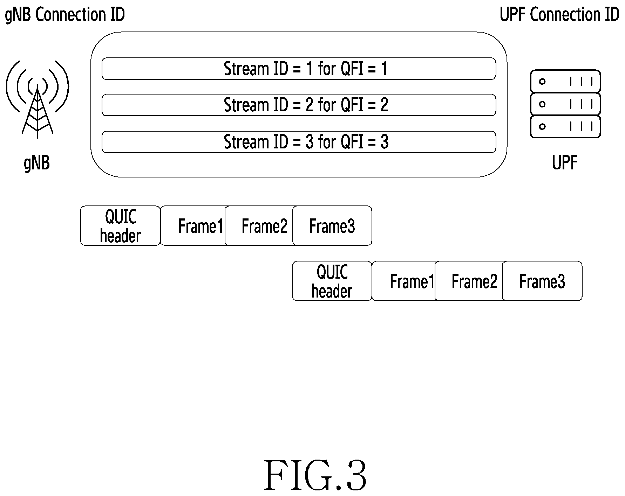

FIG. 3 illustrates an example of performing communication using a QUIC protocol according to an embodiment of the disclosure.

When the GTP-U protocol in the user plane is replaced with the QUIC protocol to configure a PDU session, information within the PDU session configured based on the GTP-U protocol may be associated with unique information of the QUIC protocol. For example, the information within the PDU session may be mapped to a connection ID (e.g., UPF connection ID or gNB connection ID), which is unique information of the QUIC protocol, and a stream ID.

Referring to FIG. 3, the connection ID may be allocated according to the PDU session in order to perform communication using the QUIC protocol. For example, for the PDU session, a gNB connection ID and a UPF connection ID corresponding to the PDU session may be allocated.

When communication is performed using the QUIC protocol, a plurality of streams may be included in one PDU session. Each of the plurality of streams may be controlled for each quality of service (QoS). In an example, each stream ID may be allocated according to a QoS flow identifier (QFI) that indicates the QoS within the PDU session in order to perform communication using the QUIC protocol. Referring to FIG. 3, when communication is performed using the QUIC protocol, stream IDs 1 to 3 may be allocated to QFIs 1 to 3 within the PDU session, respectively, and data may be managed. A stream ID may indicate an identifier that indicates each stream within a plurality of streams.

According to an embodiment, streams may be allocated for each QoS within one PDU session, and data transmission and reception may be controlled for each stream. Accordingly, even if retransmission of data in one stream among the plurality of streams occurs, data transmission and reception through a stream in which no retransmission occurs within the same PDU session may be maintained. That is, the connectivity can be maintained without data disconnection according to the stream management for each QoS within one PDU session. In addition, when communication is performed using the QUIC protocol, data traffic may be easily managed separately even when an XR, VR, or metaverse application having a large difference in characteristics between data traffic is used.

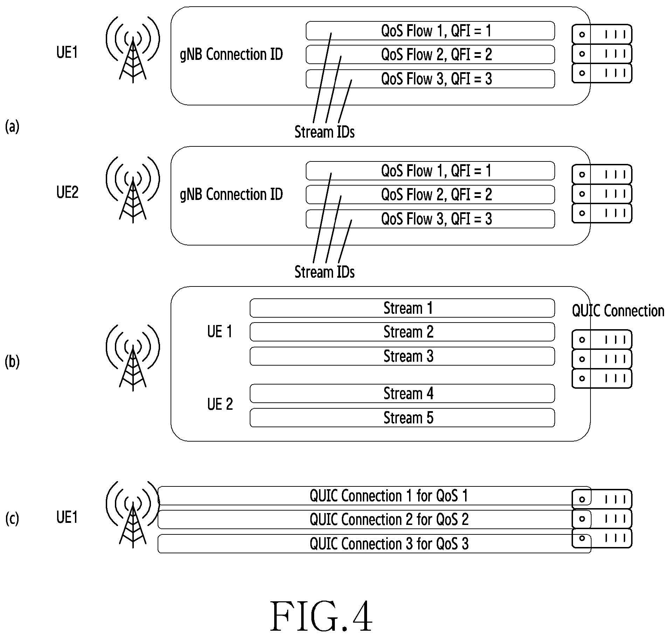

FIG. 4 illustrates a method of operating a packet data unit (PDU) session by using a QUIC protocol according to an embodiment of the disclosure.

There may be a plurality of methods of operating a PDU session based on the QUIC protocol added to the user plane protocol stack in a communication system.

Part (a) of FIG. 4 illustrates a method of operating a PDU session by mapping a stream within one QUIC connection to a QFI. Referring to part (a) of FIG. 4, one UE may be connected to a gNB and a UPF entity by using one QUIC connection. That is, one QUIC connection may be allocated to one UE, and a plurality of streams may be included in one QUIC connection. In this case, the QFI of the PDU session may be operated by being mapped to the stream of each QUIC connection. For example, a QUIC connection between the gNB connected to a first user equipment (UE) (e.g., UE 1 of FIG. 4) and the UPF entity may be a single QUIC connection. In addition, QFIs (e.g., QFI 1 to 3) of a single QUIC connection may be mapped to a plurality of streams within the QUIC, respectively, and each stream ID may be allocated. In addition, in the communication system, for a second UE (for example, UE 2 of FIG. 4) different from the first UE, a QUIC connection between the gNB connected to UE 2 and the UPF entity may be configured as a single PDU session, and QFIs of the configured PDU session may be mapped to respective stream IDs. In this case, each QFI to which each stream ID is mapped in the QUIC connection session may also be managed for each data stream.

Part (b) of FIG. 4 illustrates a method of operating a PDU session by allocating streams within one QUIC connection to the UEs. Referring to part (b) of FIG. 4, a plurality of UEs may be connected to the gNB and UPF entity by using one QUIC connection. That is, one QUIC connection may be allocated to a plurality of UEs, and a plurality of streams may be included in one QUIC connection. In this case, the QFI of the PDU session may be operated by being mapped to the stream of the QUIC connection. For example, a QUIC connection between the gNB connected to the first UE (e.g., UE 1 of FIG. 4) and the second UE (e.g., UE 2 of FIG. 4) and the UPF entity may be a single QUIC connection. For example, stream 1 to stream 3 among a plurality of streams within one QUIC connection may be allocated to the first UE, and stream 4 to stream 5 among the plurality of streams may be allocated to the second UE.

Part (c) of FIG. 4 illustrates a method of operating a PDU session by configuring a QUIC connection according to a QFI. Referring to part (c) of FIG. 4, one UE may be connected to a gNB and a UPF entity by using a plurality of QUIC connections. That is, the plurality of QUIC connections may be allocated to one UE, and the plurality of QUIC connections may be operated by being mapped to QFIs. For example, the plurality of QUIC connections between the gNB connected to the first UE (e.g., UE 1 of FIG. 4) and the UPF entity may be a plurality of QUIC connections. Referring to FIG. 4, three QUIC connections between the gNB and the UPF for the first UE may be operated by being mapped to QFIs 1 to 3 indicating the QoS.

According to the methods of parts (a) to (c) in FIG. 4, the QUIC connections between the gNB and the UPF may be allocated to the UEs and operated.

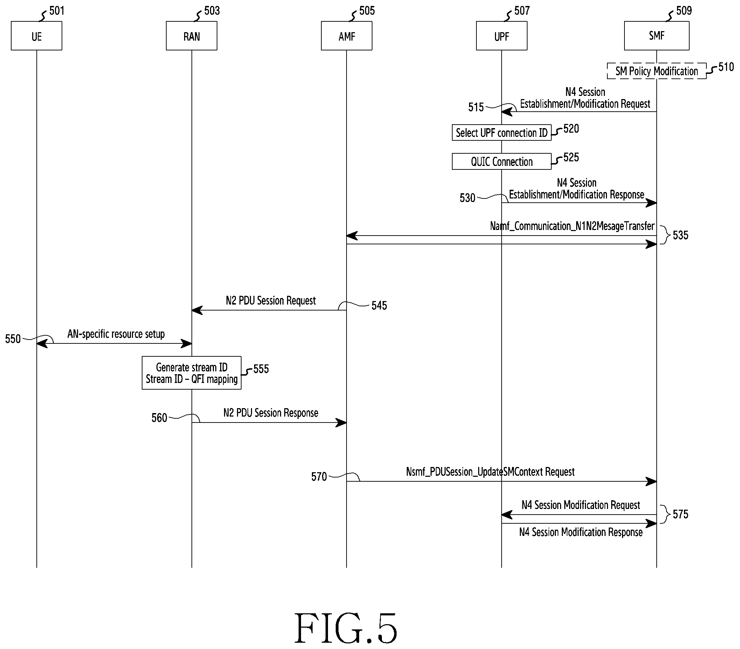

Meanwhile, a method of establishing a QUIC connection (or a PDU session based on the QUIC protocol) may vary depending on where the QUIC connection is established (for example, the UPF entity or the gNB). Specific procedures for establishing and operating the QUIC connection will be described in FIG. 5 to FIG. 13.

FIG. 5 illustrates an operation of establishing a PDU session according to an embodiment of the disclosure. Specifically, FIG. 5 illustrates a procedure in which a UPF entity generates a QUIC connection to operate a PDU session, maps streams within one QUIC connection to QFIs, and establishes and operates the PDU session.

Referring to FIG. 5, in operation 510, the SMF entity 509 may add information necessary for generating the QUIC connection to a session management (SM) policy. In an example, the information that may be added to the SM policy is described below.
- The number of streams within a QUIC connection
- A mapping rule for mapping a QoS flow identifier (QFI) in a quality of service (QoS) enforcement rule (QER) and a stream ID
- Information on the operation of a PDU session
- Information indicating a QUIC connection

However, the information that may be added to the SM policy is not limited thereto, and information necessary for operating a PDU session based on the QUIC protocol may be further included.

Information on the number of streams in a QUIC connection may indicate the number of streams in a QUIC connection to be mapped to the QFI of the PDU session, based on the QUIC protocol. Information on a rule for mapping the QFI in the QER and the stream ID may indicate a rule for using a stream within a QUIC connection for a QFI of the PDU session. In an example, the information on the rule for mapping the QFI and the stream ID may indicate information that maps the QFI and the stream ID in a one-to-one (1:1) or many-to-one (N:1) manner. For example, the information on the rule for mapping the QFI and the stream ID may include information indicating that, for two streams in a QUIC connection, stream ID 1 is mapped to QFI 1 and stream ID 2 is mapped to QFI 2 and 3.

Meanwhile, when the information on the rule for mapping the QFI and the stream ID indicates information for mapping QFIs and stream IDs in many-to-one manner, it may be necessary to transmit data through modification of the QUIC header by utilizing the characteristic that the QUIC protocol is a protocol of the user plane.

In addition, according to an embodiment, the information on the operation of the PDU session may include information indicating whether to operate by which method among several methods of establishing the PDU session. For example, it may indicate a QUIC connection in the UPF entity or a QUIC connection in the gNB. For example, the information on the operation of the PDU session in FIG. 5 may include information instructing the generation of a QUIC connection in the QUIC layer immediately after the UPF entity establishes the UPF connection ID.

In addition, according to an embodiment, the information indicating the QUIC connection may include information indicating whether to use the pre-generated QUIC connection or to generate a new QUIC connection. For example, the information indicating the QUIC connection in FIG. 5 may include information indicating to generate a new QUIC connection.

The SMF entity 509 may update the SM policy by adding information necessary for operating the PDU session to the SM policy, based on the QUIC protocol.

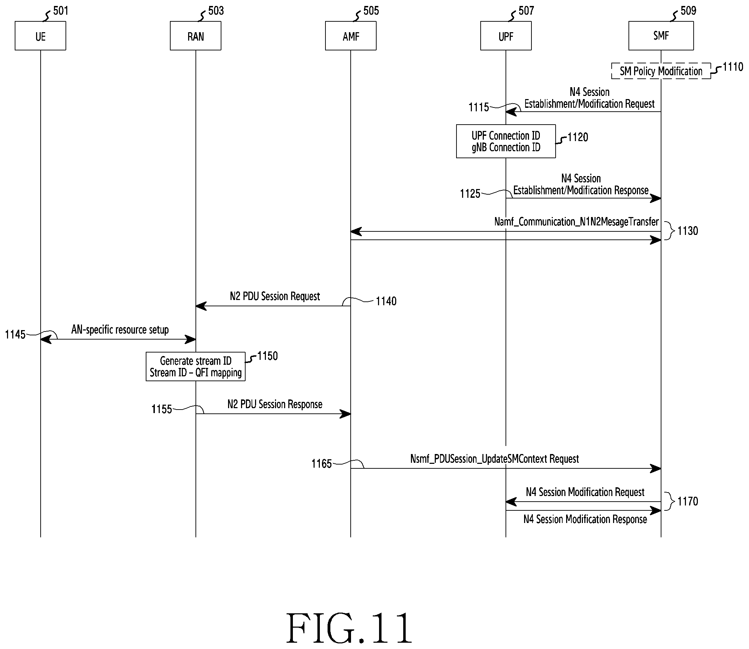

In operation 515, the SMF entity 509 may transmit an N4 session establishment request message to the UPF entity 507, based on the updated SM policy. The N4 session establishment request message may include information making a request for establishing the connection ID (e.g., UPF connection ID or gNB connection ID) required for operating the QUIC connection to the UPF entity. In an example, the SMF entity 509 of FIG. 5 may transmit an N4 session establishment request message including information making a request for establishing the UPF connection ID to the UPF entity 507. In addition, the N4 session establishment request message may include information indicating whether to use the QUIC connection pre-generated based on the information on the operation of the PDU session added to the SM policy in operation 510, or to generate a new QUIC connection. In an example, the SMF entity 509 of FIG. 5 may transmit the N4 session establishment request message including the information indicating the new QUIC connection to the UPF entity 507. A procedure of utilizing the pre-generated QUIC connection is described in more detail in FIG. 11.

In addition, the N4 session establishment request message may include information on the SM policy updated by the SMF entity 509 in operation 510. For example, the N4 session establishment request message may include the number of streams in a QUIC connection, a rule for mapping a QFI to a stream ID, information on the operation of a PDU session, and information on a QUIC connection.

The UPF entity 507 may select a UPF connection ID, based on the N4 session establishment request message received from the SMF entity 509 in operation 520, and the UPF entity 507 may generate a QUIC connection, based on the selected UPF connection ID in operation 525.

In operation 525, a QUIC connection between the UPF entity 507 and a base station (RAN) 503 may be generated in the QUIC layer of the QUIC protocol within the user plane protocol. In this case, the QUIC connection in the QUIC layer may be a QUIC connection generated before the UPF connection ID is transferred to the base station 503.

In operation 530, the UPF entity 507 may transmit an N4 session establishment response message to the SMF entity 509 responding to the N4 session establishment request message. In an example, the N4 session establishment response message may include information on the UPF connection ID selected when the UPF entity 507 generates the QUIC connection in operation 520. In addition, the N4 session establishment response message may include information on the gNB connection ID of the base station used to generate the QUIC connection between the UPF entity 507 and base station 503 in operation 525. That is, the UPF entity 507 may include the UPF connection ID and the gNB connection ID in the N4 session establishment response message and transmit the same to the SMF entity 509.

In operation 535, the SMF entity 509 and the AMF entity 505 may transmit and receive a Namf_Communication_N1N2MessageTransfer message. In an example, the Namf_Communication_N1N2MessageTransfer message may include N2 information to be transmitted by the SMF entity 509 to the base station 503. The N2 information may include the information within the SM policy updated by the SMF entity 509 in operation 510. For example, the N2 information may include the number of streams within the QUIC connection to be generated, and information on a rule for mapping QFIs to stream IDs. In addition, the N2 information may also include the UPF connection ID and the gNB connection ID. For example, the SMF entity 509 may include the UPF connection ID and gNB connection ID included in the N4 session establishment response message received from the UPF entity 507 in operation 530 in the N2 information and transmit the same to the base station 503. Meanwhile, the N2 information transmitted by the SMF entity 509 to the base station 503 may be referred to as first N2 information.

In operation 545, the AMF entity 505 may transmit an N2 PDU session request message including information making a request for an N2 PDU session to the base station 503. In an example, the N2 PDU session request message may include the first N2 information within the Namf_Communication_N1N2MessageTransfer message that the AMF entity 505 received from the SMF entity 509 in operation 535.

In operation 550, the base station 503 may exchange specific signaling in association with the information received from the UE 501 and the SMF entity 509. In an example, the base station 503 may transfer the information received from the SMF entity 509 through the AMF entity 505 to the UE.

In operation 555, the base station 503 may receive a list of QFIs, based on the N2 information received from the SMF entity 509. The base station 503 may allow or reject some QFIs in the received list of QFIs. In an example, the stream ID may not be mapped to a QFI rejected by the base station 503 in the list of QFIs. In addition, the stream ID may be mapped to a QFI allowed by the base station 503 in the list of QFIs.

The base station 503 may generate a stream ID, based on the information on the number of streams within a QUIC connection to be generated, included in the received N2 information. For example, the base station 503 may generate the indicated number of stream IDs in accordance with information on the number of streams to be generated, included in the first N2 information received from the SMF entity 509.

In addition, the base station 503 may map the generated stream ID to a QFI, based on the information on the rule for mapping the QFI and the stream ID included in the received N2 information. For example, as part (a) of FIG. 4, the RAB connected to UE 1 may map each stream ID within one QUIC connection and each QFI within the QUIC connection, based on the mapping rule included in the N2 information received from the SMF entity through the AMF entity. The QFI mapped to each of the stream IDs may indicate a QFI allowed by the base station 503 in the list of QFIs received through operation 545. For example, the base station connected to UE 2 may map each of the stream IDs within a QUIC connection different from the QUIC connection used by UE 1 and each of the QFIs within the QUIC connection, based on the mapping rule within the N2 information received from the SMF entity through the AMF entity.

In operation 560, the base station 503 may transmit an N2 PDU session response message to the AMF entity 505. The N2 PDU session response message may be a message that the base station 503 has responded to the N2 PDU session request message received from the AMF entity 505 in operation 545. For example, the N2 PDU session response message may include information indicating that a PDU session transmitted and received via the N2 interface between the base station and the AMF entity has been configured. In an example, the N2 information which the base station 503 transmits to the SMF entity 509 may be included in the N2 PDU session response message. In this case, the N2 information may include information indicating mapping between the stream ID and the QFI by the base station 503. The information indicating mapping between the stream ID and the QFI by the base station 503 may include the result of mapping between the stream ID and the allowed QFI in the list of QFIs by the base station 503 according to the mapping rule information in operation 555, and information on the rejected QFI in the list of QFIs. Meanwhile, the N2 information transmitted by base station 503 to the SMF entity 509 may be referred to as second N2 information.

In operation 570, the AMF entity 505 may transmit an Nsmf_PDUSession_UpdateSMContext request message to the SMF entity 509. In an example, the Nsmf_PDUSession_UpdateSMContext request message may include the second N2 information included in the N2 PDU session response message received by the AMF entity 505 from the base station 503 in operation 560.

In operation 575, the SMF entity 509 and the UPF entity 507 may perform a procedure of modifying the established N4 session. Specifically, the SMF entity 509 may transmit an N4 session modification request message to the UPF entity 507, and the UPF entity 507 may transmit an N4 session modification response message including result information on the modified N4 session in response thereto. In an example, the N4 session modification request message may include N2 information received from the base station 503 by the SMF entity 509 through the AMF entity 505. The UPF entity 507 may store a mapping result of the stream ID and the QFI through the N2 information included in the N4 session modification request message received from the SMF entity 509.

Through the procedure of establishing the PDU session, based on the QUIC protocol, the SMF entity 509 may perform communication using the QUIC connection, based on the UPF connection ID, the gNB connection ID, and information on the mapping between stream IDs of a plurality of streams within the QUIC connection and QFIs.

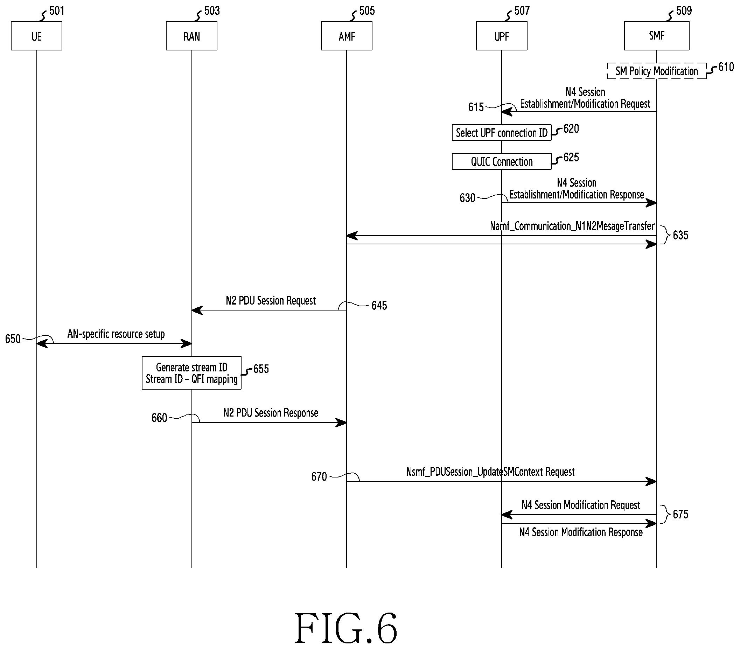

FIG. 6 illustrates an operation of establishing a PDU session according to an embodiment of the disclosure. Specifically, FIG. 6 illustrates a procedure in which a UPF entity generates a QUIC connection to operate a PDU session, allocate streams within one QUIC connection to a plurality of UEs, and establishes a PDU session.

Referring to FIG. 6, operations 610 to 650 and operations 660 to 675 may be identical to operations 510 to 550 and operations 560 to 575 of FIG. 5, respectively, and a detailed description thereof will be omitted.

In operation 655, the base station 503 may receive a list of QFIs, based on the N2 information received from the SMF entity 509. The base station 503 may allow or reject some QFIs in the received list of QFIs. In an example, the stream ID may not be mapped to the QFI rejected by the base station 503 in the list of QFIs. In addition, the stream ID may be mapped to a QFI allowed by the base station 503 in the list of QFIs.

The base station 503 may generate a stream ID, based on the information on the number of streams within a QUIC connection to be generated, included in the received N2 information. For example, the base station 503 may generate the indicated number of stream IDs in accordance with information on the number of streams to be generated, included in the first N2 information received from the SMF entity 509.

In addition, the base station 503 may map the generated stream ID to a QFI, based on the information on the rule for mapping the QFI and the stream ID included in the received N2 information. The plurality of streams may be allocated to the plurality of UEs within one QUIC connection. For example, as part (b) of FIG. 4, the base station may map each of the stream IDs within one QUIC connection to each of the QFIs within the QUIC connection, based on the mapping rule within the N2 information received from the SMF entity through the AMF entity. The QFI mapped to each of the stream IDs may indicate a QFI allowed by the base station 503 in the list of QFIs received through operation 545. In this case, the streams mapped to respective QFIs within one QUIC connection may be configured for the plurality of UEs. For example, streams having stream IDs 1 to 5 within one QUIC connection may be mapped to QFIs 1 to 5 according to the mapping rule, and streams corresponding to stream IDs 1 to 3 among the mapped streams may be allocated to the first UE and streams corresponding to stream IDs 4 to 5 may be allocated to the second UE.

Through the procedure of establishing the PDU session, based on the QUIC protocol, the SMF entity 509 may perform communication using the QUIC connection, based on the UPF connection ID, the gNB connection ID, and information on the mapping between stream IDs of a plurality of streams within the QUIC connection and QFIs.

FIG. 5 and FIG. 6 illustrate a case in which the QUIC connection between the UPF entity and the base station is generated by the UPF entity. That is, FIG. 5 and FIG. 6 illustrate a case in which a QUIC connection is made in the QUIC layer, based on the UPF connection ID and gNB connection ID received from the UPF entity before the SMF entity transmits the N2 information to the base station.

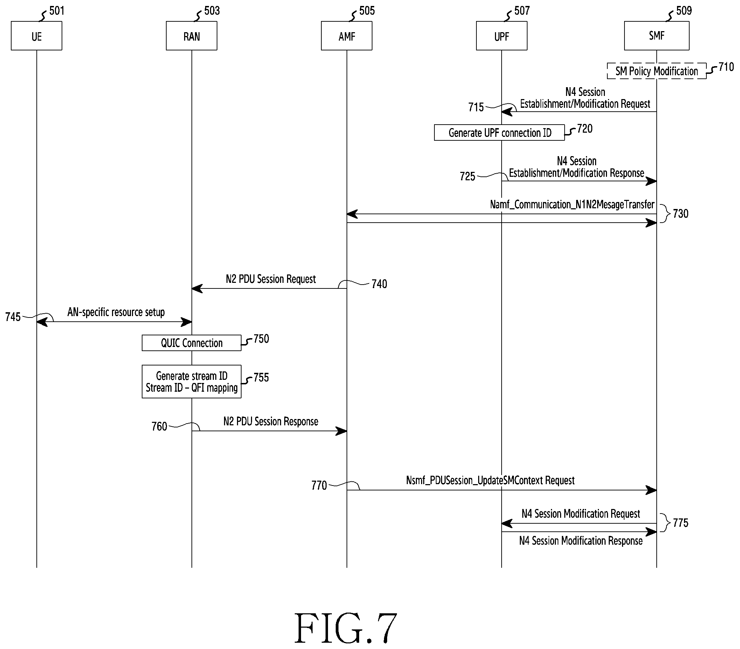

FIG. 7 illustrates an operation of establishing a PDU session according to an embodiment of the disclosure. Specifically, FIG. 7 illustrates a procedure in which a QUIC connection is generated in a QUIC layer after a UPF connection ID configured by the UPF entity is transferred to the base station, and a stream within one QUIC connection is mapped to a QFI to establish a PDU session.

Referring to FIG. 7, in operation 710, the SMF entity 509 may add information necessary to establish the PDU session based on the QUIC protocol to an SM policy. In an example, the information that may be added to the SM policy is described below.
- The number of streams within a QUIC connection
- A mapping rule for mapping a QoS flow identifier (QFI) in a quality of service (QoS) enforcement rule (QER) and a stream ID
- Information on the operation of a PDU session
- Information indicating a QUIC connection

However, the information that may be added to the SM policy is not limited thereto, and information necessary for operating a PDU session based on the QUIC protocol may be further included.

In an example, the information on the operation of the PDU session in FIG. 7 may include information indicating the generation of the QUIC connection in the QUIC layer after the UPF connection ID configured by the UPF entity is transferred to the base station. In addition, in an example, the information indicating the QUIC connection in FIG. 7 may include information indicating to generate a new QUIC connection.

In operation 715, the SMF entity 509 may transmit a N4 session establishment request message to the UPF entity 507, based on the updated SM policy. The N4 session establishment request message may include information making a request for configuring a connection ID (e.g., a UPF connection ID or a gNB connection ID) required for operating the PDU session, based on the QUIC protocol, to the UPF. In an example, the SMF entity 509 of FIG. 7 may transmit an N4 session establishment request message including information making a request for establishing the UPF connection ID to the UPF entity 507.

In operation 720, the UPF entity 507 may select a UPF connection ID necessary for generating a QUIC connection between the UPF entity 507 and the base station 503, based on the N4 session establishment request message received from the SMF entity 509.

In operation 725, the UPF entity 507 may transmit an N4 session establishment response message to the SMF entity 509 responding to the N4 session establishment request message. In an example, the N4 session establishment response message may include information on the UPF connection ID selected by the UPF entity 507 in operation 720. In this case, since the QUIC connection is not generated in the UPF entity in FIG. 7, the N4 session establishment response message may not include information on the gNB connection ID of the base station that may be used for generating the QUIC connection.

In operation 730, the SMF entity 509 and the AMF entity 505 may transmit and receive a Namf_Communication_N1N2MessageTransfer message. In an example, the Namf_Communication_N1N2MessageTransfer message may include N2 information to be transmitted by the SMF entity 509 to the base station 503. The N2 information may include the information within the SM policy updated by the SMF entity 509 in operation 710. For example, the N2 information may include the number of streams within the QUIC connection to be generated, and information on a rule for mapping QFIs to stream IDs. In addition, the N2 information may also include a UPF connection ID. For example, the SMF entity 509 may include the UPF connection ID included in the N4 session establishment response message received from the UPF entity 507 in operation 725 in the N2 information and transmit the same to the base station 503. Meanwhile, the N2 information transmitted by the SMF entity 509 to the base station 503 may be referred to as first N2 information.

In operation 740, the AMF entity 505 may transmit an N2 PDU session request message including information making a request for an N2 PDU session to the base station 503. In an example, theN2 PDU session request message may include the first N2 information that the AMF entity 505 received from the SMF entity 509 through the Namf_Communication_N1N2MessageTransfer message in operation 730.

In operation 745, the base station 503 may exchange specific signaling in association with the information received from the UE 501 and the SMF entity 509. In an example, the base station 503 may transfer the information received from the SMF entity 509 through the AMF entity 505 to the UE.

In operation 750, a QUIC connection between the UPF entity 507 and an base station 503 may be generated in the QUIC layer of the QUIC protocol within the user plane protocol. In this case, when the UPF connection ID is included in the information received from the SMF entity 509 through the AMF entity 505, the QUIC connection may be generated in the QUIC layer after the base station 503 receives the UPF connection ID. In the meantime, the gNB connection ID of the base station may be used when the QUIC connection between the UPF entity 507 and the base station 503 is generated.

In operation 755, the base station 503 may receive a list of QFIs, based on the N2 information received from the SMF entity 509. The base station 503 may allow or reject some QFIs in the received list of QFIs. In an example, the stream ID may not be mapped to the QFI rejected by the base station 503 in the list of QFIs. In addition, the stream ID may be mapped to a QFI allowed by the base station 503 in the list of QFIs.

The base station 503 may generate stream IDs, based on the information on the number of streams within a QUIC connection to be generated, included in the received N2 information. For example, the base station 503 may generate the indicated number of stream IDs in accordance with information on the number of streams to be generated, included in the first N2 information received from the SMF entity 509.

In addition, the base station 503 may map the generated stream ID to a QFI, based on the information on the rule for mapping the QFI and the stream ID included in the received N2 information. For example, as part (a) of FIG. 4, the RAB connected to UE 1 may map each stream ID within one QUIC connection and each QFI within the QUIC connection, based on the mapping rule included in the N2 information received from the SMF entity via the AMF entity. The QFI mapped to each of the stream IDs may indicate a QFI allowed by the base station 503 in the list of QFIs received through operation 545. For example, the base station connected to UE 2 may map each of the stream IDs within a QUIC connection different from the QUIC connection used by UE 1 and each of the QFIs within the QUIC connection, based on the mapping rule within the N2 information received from the SMF entity through the AMF entity.

In operation 760, the base station 503 may transmit an N2 PDU session response message to the AMF entity 505. The N2 PDU session response message may be a message that the base station 503 has responded to the N2 PDU session request message received from the AMF entity 505 in operation 740. For example, the N2 PDU session response message may include information indicating that a PDU session transmitted and received via the N2 interface between the base station and the AMF entity has been configured. In addition, N2 information transmitted by the base station 503 to the SMF entity 509 may be included in the N2 PDU session response message. The N2 information to be transmitted by the base station 503 to the SMF entity 509 may include information indicating mapping between a stream ID and a QFI by the base station 503. The information indicating mapping between the stream ID and the QFI by the base station 503 may include the result of mapping between the stream ID and the allowed QFI in the list of QFIs by the base station 503 according to the mapping rule in operation 755, and information on the rejected QFI in the list of QFIs. In addition, the N2 information may also include information on the gNB connection ID used when the QUIC connection generated by the base station 503 is generated. Meanwhile, the N2 information transmitted by base station 503 to the SMF entity 509 may be referred to as second N2 information.

In operation 770, the AMF entity 505 may transmit an Nsmf_PDUSession_UpdateSMContext request message to the SMF entity 509. In an example, the Nsmf_PDUSession_UpdateSMContext request message may include the second N2 information included in the N2 PDU session response message received by the AMF entity 505 from the base station 503 in operation 760.

In operation 775, the SMF entity 509 and the UPF entity 507 may perform a procedure of modifying the established N4 session. Specifically, the SMF entity 509 may transmit an N4 session modification request message to the UPF entity 507, and the UPF entity 507 may transmit an N4 session modification response message including result information on the modified N4 session in response thereto. In an example, the N4 session modification request message may include N2 information and the gNB connection ID received from the base station 503 by the SMF entity 509 through the AMF entity 505. The UPF entity 507 may store a mapping result of the stream ID and the QFI and the gNB connection ID through the N2 information included in the N4 session modification request message received from the SMF entity 509.

Through the procedure of establishing the PDU session, based on the UPF connection ID, the gNB connection ID, and information on the mapping between stream IDs of a plurality of streams within the QUIC connection and QFIs, the SMF entity 509 may perform communication using the QUIC connection.

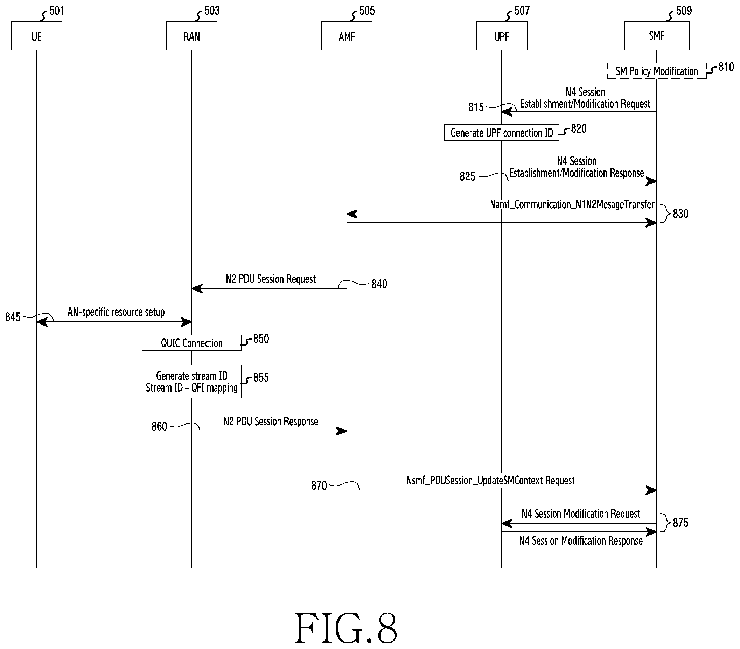

FIG. 8 illustrates an operation of establishing a PDU session according to an embodiment of the disclosure. Specifically, FIG. 8 illustrates a procedure in which a QUIC connection is generated in a QUIC layer after a UPF connection ID configured by the UPF entity is transferred to the base station, and a stream within one QUIC connection is allocated to a plurality of UEs to establish a PDU session.

Referring to FIG. 8, operations 810 to 850 and operations 860 to 875 may be identical to operations 710 to 750 and operations 760 to 775 of FIG. 7, respectively, and a detailed description thereof will be omitted.

In operation 855, the base station 503 may receive a list of QFIs, based on the N2 information received from the SMF entity 509. The base station 503 may allow or reject some QFIs in the received list of QFIs. In an example, the stream ID may not be mapped to the QFI rejected by the base station 503 in the list of QFIs. In addition, the stream ID may be mapped to a QFI allowed by the base station 503 in the list of QFIs.

The base station 503 may generate a stream ID, based on the information on the number of streams within a QUIC connection to be generated, included in the received N2 information. For example, the base station 503 may generate the indicated number of stream IDs in accordance with information on the number of streams to be generated, included in the first N2 information received from the SMF entity 509.

In addition, the base station 503 may map the generated stream ID to a QFI, based on the information on the rule for mapping the QFI and the stream ID included in the received N2 information. The plurality of streams may be allocated to the plurality of UEs within one QUIC connection. For example, as part (b) of FIG. 4, the base station may map each of the stream IDs within one QUIC connection to each of the QFIs within the QUIC connection, based on the mapping rule within the N2 information received from the SMF entity through the AMF entity. In this case, the streams mapped to respective QFIs within one QUIC connection may be configured for the plurality of UEs. For example, streams having stream IDs 1 to 5 within one QUIC connection may be mapped to QFIs 1 to 5 according to the mapping rule, and streams corresponding to stream IDs 1 to 3 among the mapped streams may be allocated to the first UE and streams corresponding to stream IDs 4 to 5 may be allocated to the second UE.

Through the procedure of establishing the PDU session based on the QUIC protocol, the SMF entity 509 may perform communication using the QUIC connection, based on the UPF connection ID, the gNB connection ID, and information on the mapping between stream IDs of a plurality of streams within the QUIC connection and QFIs.

FIG. 7 and FIG. 8 illustrate a case in which the QUIC connection between the UPF entity and the base station is generated by the base station. That is, FIG. 7 and FIG. 8 illustrate a case in which the SMF entity transmits N2 information to the base station, the base station receives the UPF connection ID included in the N2 information, and then a QUIC connection is made in the QUIC layer.

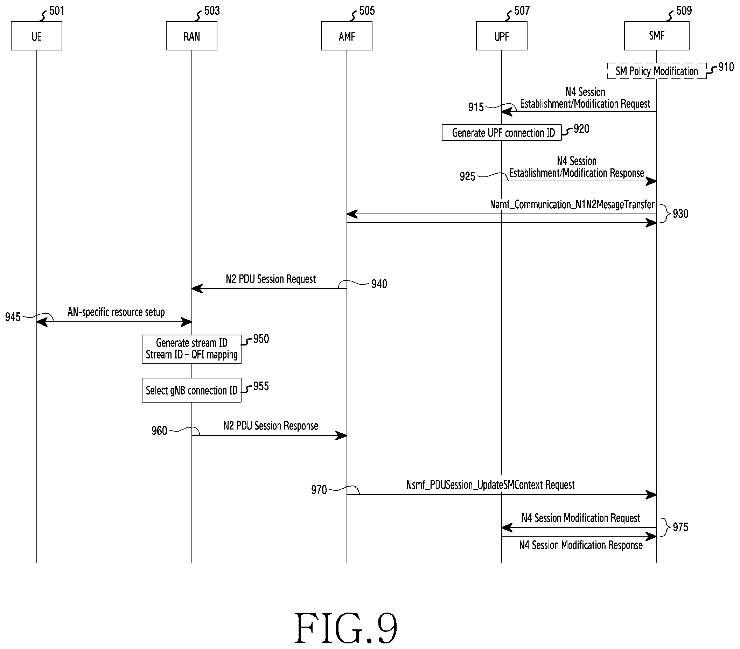

FIG. 9 illustrates an operation of establishing a PDU session according to an embodiment of the disclosure. Specifically, FIG. 9 illustrates a procedure of establishing a PDU session by mapping a stream in one QUIC connection and a QFI when a QUIC connection is not generated in the QUIC layer and a QUIC connection using handshake information is generated in a 3GPP network.

Referring to FIG. 9, in operation 910, the SMF entity 509 may add information required to establish a PDU session based on the QUIC protocol to an SM policy.

In an example, the information that may be added to the SM policy is described below.
- The number of streams within a QUIC connection
- A mapping rule for mapping a QoS flow identifier (QFI) in a quality of service (QoS) enforcement rule (QER) and a stream ID
- Information on the operation of a PDU session
- Information indicating a QUIC connection

However, the information that may be added to the SM policy is not limited thereto, and information necessary for operating a PDU session based on the QUIC protocol may be further included.

In an example, the information on the operation of the PDU session in FIG. 9 may include information indicating the generation of a QUIC connection in the 3GPP network of the base station.

The information indicating the QUIC connection may include information indicating whether to use the pre-established QUIC connection or to generate a new QUIC connection. For example, the information indicating the QUIC connection in FIG. 9 may include information indicating to generate a new QUIC connection.

The SMF entity 509 may update the SM policy by adding information necessary for operating the PDU session, based on the QUIC protocol to the SM policy.

In operation 915, the SMF entity 509 may transmit a N4 session establishment request message to the UPF entity 507, based on the updated SM policy. The N4 session establishment request message may include information making a request for configuring a connection ID (e.g., a UPF connection ID or a gNB connection ID) required for operating the PDU session, based on the QUIC protocol, to the UPF. In an example, the SMF entity 509 of FIG. 9 may transmit an N4 session establishment request message including information making a request for establishing the UPF connection ID to the UPF entity 507.

In operation 920, the UPF entity 507 may select a UPF connection ID necessary for generating a QUIC connection between the UPF entity 507 and the base station 503, based on the N4 session establishment request message received from the SMF entity 509.

In operation 925, the UPF entity 507 may transmit an N4 session establishment response message to the SMF entity 509 responding to the N4 session establishment request message. In an example, the N4 session establishment response message may include information on the UPF connection ID selected by the UPF entity 507 in operation 920. In this case, the N4 session establishment response message of FIG. 9 may not include information on the gNB connection ID of the base station that may be used to generate the QUIC connection.

According to an embodiment, in FIG. 9, the N4 session establishment response message may additionally include information necessary for a handshake procedure, as well as the UPF connection ID. The handshake procedure may refer to a procedure for setting up link parameters of a communication link so as to allow communication targets to communicate reliably through a direct link. The information required for the handshake procedure that may be included in the N4 session establishment response message may include the following information. However, the disclosure is not limited thereto.
- Initial Information: may include a source connection ID of the UPF entity and a client Hello message.
- CRYPTO: may include a cryptographic handshake message.
- 0-RTT information: may include data required for 0-RTT handshake connection.

In operation 930, the SMF entity 509 and the AMF entity 505 may transmit and receive a Namf_Communication_N1N2MessageTransfer message. In an example, the Namf_Communication_N1N2MessageTransfer message may include N2 information to be transmitted by the SMF entity 509 to the base station 503. The N2 information may include the information within the SM policy updated by the SMF entity 509 in operation 910. For example, the N2 information may include the number of streams within the QUIC connection to be generated, and information on a rule for mapping QFIs to stream IDs. In addition, the N2 information may also include the UPF connection ID and the information required for the handshake procedure (e.g., initial information, CRYPTO, 0-RTT information, and the like). For example, the SMF entity 509 may include the UPF connection ID included in the N4 session establishment response message received from the UPF entity 507 in operation 925 and the information required for the handshake procedure in the N2 information and transmit the same to the base station 503. Meanwhile, the N2 information transmitted by the SMF entity 509 to the base station 503 may be referred to as first N2 information.

In operation 940, the AMF entity 505 may transmit an N2 PDU session request message including information making a request for an N2 PDU session to the base station 503. In an example, theN2 PDU session request message may include the first N2 information that the AMF entity 505 received from the SMF entity 509 through the Namf_Communication_N1N2MessageTransfer message.

In operation 945, the base station 503 may exchange specific signaling in association with the information received from the UE 501 and the SMF entity 509. In an example, the base station 503 may transfer the information received from the SMF entity 509 through the AMF entity 505 to the UE.

In operation 950, the base station 503 may receive a list of QFIs, based on the N2 information received from the SMF entity 509. The base station 503 may allow or reject some QFIs in the received list of QFIs. In an example, the stream ID may not be mapped to the QFI rejected by the base station 503 in the list of QFIs. In addition, the stream ID may be mapped to a QFI allowed by the base station 503 in the list of QFIs.

The base station 503 may generate a stream ID, based on the information on the number of streams within a QUIC connection to be generated, included in the received N2 information. For example, the base station 503 may generate the indicated number of stream IDs in accordance with information on the number of streams to be generated, included in the first N2 information received from the SMF entity 509.

In addition, the base station 503 may map the generated stream ID to a QFI, based on the information on the rule for mapping the QFI and the stream ID included in the received N2 information. For example, as part (a) of FIG. 4, the RAB connected to UE 1 may map each stream ID within one QUIC connection and each QFI within the QUIC connection, based on the mapping rule included in the N2 information received from the SMF entity via the AMF entity. For example, the base station connected to UE 2 may map each of the stream IDs within a QUIC connection different from the QUIC connection used by UE 1 and each of the QFIs within the QUIC connection, based on the mapping rule within the N2 information received from the SMF entity through the AMF entity.

According to an embodiment, in FIG. 9, the base station 503 may generate a QUIC connection within the 3GPP, based on the UPF connection ID received from the SMF entity 509 through the AMF entity 505 and the information required for the handshake. In this case, the QUIC connection may not be generated in the QUIC layer, and the information required for the QUIC connection may be transferred to the base station 503 so that the QUIC connection may be generated within the 3GPP.

In operation 955, the base station 503 may select a gNB connection ID configured for the QUIC connection, based on the QUIC connection generated within the 3GPP. In an example, the selected gNB connection ID may be included in the Handshake Information that means information of a handshake associated with the QUIC connection.

In operation 960, the base station 503 may transmit an N2 PDU session response message to the AMF entity 505. The N2 PDU session response message may be a message that the base station 503 has responded to the N2 PDU session request message received from the AMF entity 505 in operation 940. For example, the N2 PDU session response message may include information indicating that a PDU session transmitted and received via the N2 interface between the base station and the AMF entity has been configured. In addition, N2 information transmitted by the base station 503 to the SMF entity 509 may be included in the N2 PDU session response message. The N2 information transmitted by the base station 503 to the SMF entity 509 may include information on mapping between a stream ID and a QFI by the base station 503. The information on mapping between the stream ID and the QFI may include information indicating the result of mapping between the stream ID and the QFI by the base station 503 according to the mapping rule in operation 950. In addition, the N2 information may include handshake information related to the QUIC connection in association with the QUIC connection generated inside 3GPP. The handshake information related to the QUIC connection may include the following information. However, the disclosure is not limited thereto.
- Initial Information: may include a server Hello message.
- CRYPTO: may include a cryptographic handshake message.
- 1-RTT information: may include data required for 1-RTT handshake connection.
- Handshake Information: may include a gNB connection ID selected by the base station when a QUIC connection is generated within the 3GPP.
- ACK frame: may include information for acknowledging reception of a client Hello message.

Information on the gNB connection ID selected by the base station 503 may also be included. Meanwhile, the N2 information transmitted by base station 503 to the SMF entity 509 may be referred to as second N2 information.

In operation 970, the AMF entity 505 may transmit an Nsmf_PDUSession_UpdateSMContext request message to the SMF entity 509. In an example, the Nsmf_PDUSession_UpdateSMContext request message may include the second N2 information in the N2 PDU session response message received by the AMF entity 505 from the base station 503.

In operation 975, the SMF entity 509 and the UPF entity 507 may perform a procedure of modifying the established N4 session. Specifically, the SMF entity 509 may transmit an N4 session modification request message to the UPF entity 507, and the UPF entity 507 may transmit an N4 session modification response message including result information on the modified N4 session in response thereto. In an example, the N4 session modification request message may include N2 information (e.g., the mapping result between a stream ID and a QFI, and handshake information related to the QUIC connection) received by the SMF entity 509 from the base station 503 through the AMF entity 505. The UPF entity 507 may store the mapping result of the stream ID and the QFI, and handshake information related to the QUIC connection through the N2 information included in the N4 session modification request message received from the SMF entity 509.

Through the procedure of establishing the PDU session based on the QUIC protocol, the SMF entity 509 may perform communication using the QUIC connection, based on the UPF connection ID, the gNB connection ID, and information on the mapping between stream IDs of a plurality of streams within the QUIC connection and QFIs.

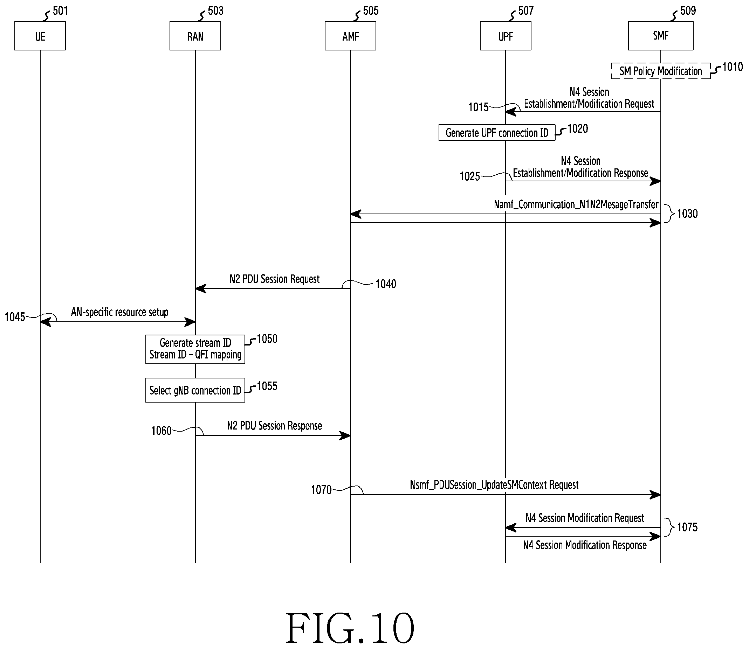

FIG. 10 illustrates an operation of establishing a PDU session according to an embodiment of the disclosure. Specifically, FIG. 10 illustrates a procedure of establishing a PDU session allocating streams within one QUIC connection to a plurality of UEs when the QUIC connection using handshake information is generated in the 3GPP network without the generation of the QUIC connection in the QUIC layer.

Referring to FIG. 10, operations 1010 to 1045 and operations 1060 to 1075 may be identical to operations 910 to 945 and operations 960 to 975 of FIG. 9, respectively, and a detailed description thereof will be omitted.

In operation 1050, the base station 503 may receive a list of QFIs, based on the N2 information received from the SMF entity 509. The base station 503 may allow or reject some QFIs in the received list of QFIs. In an example, the stream ID may not be mapped to the QFI rejected by the base station 503 in the list of QFIs. In addition, the stream ID may be mapped to a QFI allowed by the base station 503 in the list of QFIs.

The base station 503 may generate a stream ID, based on the information on the number of streams within a QUIC connection to be generated, included in the received N2 information. For example, the base station 503 may generate the indicated number of stream IDs in accordance with information on the number of streams to be generated, included in the first N2 information received from the SMF entity 509.

In addition, the base station 503 may map the generated stream ID to a QFI, based on the information on the rule for mapping the QFI and the stream ID included in the received N2 information. For example, as part (b) of FIG. 4, the base station may map each of the stream IDs within one QUIC connection to each of the QFIs within the QUIC connection, based on the mapping rule within the N2 information received from the SMF entity through the AMF entity. In this case, the streams mapped to respective QFIs within one QUIC connection may be configured for the plurality of UEs. For example, streams having stream IDs 1 to 5 within one QUIC connection may be mapped to QFIs 1 to 5 according to the mapping rule, and streams corresponding to stream IDs 1 to 3 among the mapped streams may be allocated to the first UE and streams corresponding to stream IDs 4 to 5 may be allocated to the second UE.

According to an embodiment, in FIG. 10, the base station 503 may generate a QUIC connection within the 3GPP, based on the UPF connection ID received in the previous operation and the information required for the handshake. In this case, the QUIC connection may not be generated in the QUIC layer, and the information required for the QUIC connection may be transferred to the base station 503 so that the QUIC connection may be generated within the 3GPP.

In operation 1055, the base station 503 may select a gNB connection ID configured for the QUIC connection, based on the QUIC connection generated within the 3GPP. In an example, the selected gNB connection ID may be included in the Handshake Information that means information of a handshake associated with the QUIC connection.

Through the procedure of establishing the PDU session based on the QUIC protocol, the SMF entity 509 may perform communication using the QUIC connection, based on the UPF connection ID, the gNB connection ID, and information on the mapping between stream IDs of a plurality of streams within the QUIC connection and QFIs.

FIG. 9 and FIG. 10 illustrate a case in which the SMF entity transmits handshake information required for generating a QUIC connection within the 3GPP to the base station. That is, FIG. 9 and FIG. 10 illustrate a case in which a QUIC connection is generated not in the QUIC layer but within the 3GPP as the SMF entity transmits information required for the QUIC handshake to the base station.

FIG. 11 illustrates an operation of establishing a PDU session according to an embodiment of the disclosure. Specifically, FIG. 11 illustrates a procedure of establishing a PDU session by using the generated existing QUIC connection to operate the PDU session and allocating streams within one QUIC connection to a plurality of UEs.

Referring to FIG. 11, in operation 1110, the SMF entity 509 may add information necessary to establish the PDU session based on the QUIC protocol to an SM policy. In an example, the information that may be added to the SM policy is described below.
- The number of streams within a QUIC connection
- A mapping rule for a QFI within a QER and a stream ID
- Information on the operation of a PDU session
- Information indicating a QUIC connection

However, the information that may be added to the SM policy is not limited thereto, and information necessary for operating a PDU session based on the QUIC protocol may be further included.

In an example, the information on the operation of the PDU session added to FIG. 11 may include information indicating to use the pre-generated QUIC connection.

The SMF entity 509 may update the SM policy by adding information necessary for operating the PDU session, based on the QUIC protocol to the SM policy.

In operation 1115, the SMF entity 509 may transmit a N4 session establishment request message to the UPF entity 507, based on the updated SM policy. The N4 session establishment request message may include information making a request for configuring a connection ID (e.g., a UPF connection ID or a gNB connection ID) required for operating the PDU session, based on the QUIC protocol, to the UPF. In an example, the SMF entity 509 of FIG. 11 may transmit an N4 session establishment request message including information making a request for the UPF connection ID and the gNB connection ID based on the generated existing QUIC connection to the UPF entity 507.

In operation 1120, the UPF entity 507 may identify information on the UPF connection ID and the gNB connection ID configured for the pre-generated QUIC connection, based on the information indicating the pre-generated QUIC connection included in the N4 session establishment request message received from the SMF entity 509.

In operation 1125, the UPF entity 507 may transmit an N4 session establishment response message to the SMF entity 509 responding to the N4 session establishment request message. In an example, the N4 session establishment response message may include information on the UPF connection ID and the gNB connection ID configured for the pre-generated QUIC connection identified by the UPF entity 507 in operation 1120. That is, the UPF entity 507 may include the UPF connection ID and the gNB connection ID for the pre-generated QUIC connection indicated by the N4 session establishment request message of operation 1115 in the N4 session establishment response message and transmit the same to the SMF entity 509.

In operation 1130, the SMF entity 509 and the AMF entity 505 may transmit and receive a Namf_Communication_N1N2MessageTransfer message. In an example, the Namf_Communication_N1N2MessageTransfer message may include N2 information to be transmitted by the SMF entity 509 to the base station 503. The N2 information may include the information within the SM policy updated by the SMF entity 509 in operation 1110. For example, the N2 information may include the number of streams within the QUIC connection, information on a rule for mapping QFIs to stream IDs, and information indicating the pre-generated QUIC connection. In addition, the N2 information may also include the UPF connection ID and the gNB connection ID. For example, the SMF entity 509 may include the UPF connection ID and gNB connection ID included in the N4 session establishment response message received from the UPF entity 507 in operation 1125 in the N2 information and transmit the same to the base station 503. Meanwhile, the N2 information transmitted by the SMF entity 509 to the base station 503 may be referred to as first N2 information.

In operation 1140, the AMF entity 505 may transmit an N2 PDU session request message including information making a request for an N2 PDU session to the base station 503. In an example, theN2 PDU session request message may include the N2 information within the Namf_Communication_N1N2MessageTransfer message which the AMF entity 505 received from the SMF entity 509.

In operation 1145, the base station 503 may exchange specific signaling in association with the information received from the UE 501 and the SMF entity 509. In an example, the base station 503 may transfer the information received from the SMF entity 509 through the AMF entity 505 to the UE.

In operation 1150, the base station 503 may receive a list of QFIs, based on the N2 information received from the SMF entity 509. The base station 503 may allow or reject some QFIs in the received list of QFIs. In an example, the stream ID may not be mapped to the QFI rejected by the base station 503 in the list of QFIs. In addition, the stream ID may be mapped to a QFI allowed by the base station 503 in the list of QFIs.

The base station 503 may generate a stream ID, based on the information on the number of streams within a QUIC connection to be generated, included in the received N2 information. For example, the base station 503 may generate the indicated number of stream IDs in accordance with information on the number of streams to be generated, included in the first N2 information received from the SMF entity 509.

In addition, the base station 503 may map the generated stream ID to a QFI, based on the information on the rule for mapping the QFI and the stream ID included in the received N2 information. The plurality of streams may be allocated to the plurality of UEs within one QUIC connection. For example, as part (b) of FIG. 4, the base station may map each of the stream IDs within one QUIC connection to each of the QFIs within the QUIC connection, based on the mapping rule within the N2 information received from the SMF entity through the AMF entity. In this case, the streams mapped to respective QFIs within one QUIC connection may be configured for the plurality of UEs. For example, streams having stream IDs 1 to 5 within one QUIC connection may be mapped to QFIs 1 to 5 according to the mapping rule, and streams corresponding to stream IDs 1 to 3 among the mapped streams may be allocated to the first UE and streams corresponding to stream IDs 4 to 5 may be allocated to the second UE.

In operation 1155, the base station 503 may transmit an N2 PDU session response message to the AMF entity 505. The N2 PDU session response message may be a message that the base station 503 has responded to the N2 PDU session request message received from the AMF entity 505 in operation 545. For example, the N2 PDU session response message may include information indicating that a PDU session transmitted and received via the N2 interface between the base station and the AMF entity has been configured. In an example, the N2 information which the base station 503 transmits to the SMF entity 509 may be included in the N2 PDU session response message. The N2 information transmitted by the base station 503 to the SMF entity 509 may include information on mapping between a stream ID and a QFI by the base station 503. The information on mapping between the stream ID and the QFI by the base station 503 may include the result of mapping between the stream ID and the QFI according to the mapping rule in operation 1155. Meanwhile, the N2 information transmitted by base station 503 to the SMF entity 509 may be referred to as second N2 information.

In operation 1165, the AMF entity 505 may transmit an Nsmf_PDUSession_UpdateSMContext request message to the SMF entity 509. The second N2 information received from the base station 503 by the AMF entity 505 in operation 1155 may be included in the Nsmf_PDUSession_UpdateSMContext request message.

In operation 1170, the SMF entity 509 and the UPF entity 507 may perform a procedure of modifying the established N4 session. Specifically, the SMF entity 509 may transmit the N4 session modification request message to the UPF entity 507, and the UPF entity 507 may transmit the N4 session modification response message including result information on the modified N4 session in response thereto. In an example, the N4 session modification request message may include N2 information received from the base station 503 by the SMF entity 509 through the AMF entity 505. The UPF entity 507 may store a mapping result of the stream ID and the QFI through the N2 information included in the N4 session modification request message received from the SMF entity 509.

Through the procedure of establishing the PDU session based on the QUIC protocol, the SMF entity 509 may perform communication using the QUIC connection, based on the UPF connection ID, the gNB connection ID, and information on the mapping between stream IDs of a plurality of streams within the QUIC connection and QFIs.

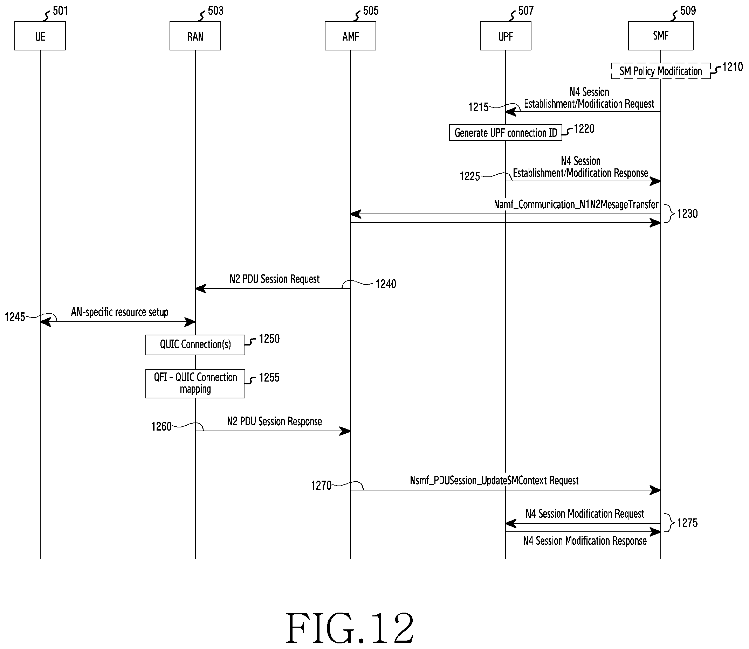

FIG. 12 illustrates an operation of establishing a PDU session according to an embodiment of the disclosure. Specifically, FIG. 12 illustrates a procedure in which a QUIC connection is generated in a QUIC layer after a UPF connection ID configured by the UPF entity is transferred to the base station, and a plurality of QUIC connections are mapped according to QFIs to operate a PDU session.

Referring to FIG. 12, in operation 1210, the SMF entity 509 may add information required to establish a PDU session based on the QUIC protocol to an SM policy. In an example, the information that may be added to the SM policy is described below.
- The number of streams within a QUIC connection
- A mapping rule for a QFI within a QER and a stream ID
- Information on the operation of a PDU session
- Information indicating a QUIC connection

However, the information that may be added to the SM policy is not limited thereto, and information necessary for operating a PDU session based on the QUIC protocol may be further included.

In an example, the information on the operation of the PDU session in FIG. 12 may include information indicating the generation of the QUIC connection by the base station. In addition, in an example, the information indicating the QUIC connection in FIG. 12 may include information indicating to generate a new QUIC connection. The information indicating the QUIC connection in FIG. 12 may include information indicating the generation of a plurality of QUIC connections.

The SMF entity 509 may update the SM policy by adding information necessary for operating the PDU session, based on the QUIC protocol to the SM policy.

In operation 1215, the SMF entity 509 may transmit a N4 session establishment request message to the UPF entity 507, based on the updated SM policy. The N4 session establishment request message may include information making a request for configuring a connection ID (e.g., a UPF connection ID or a gNB connection ID) required for operating the PDU session, based on the QUIC protocol, to the UPF. The SMF entity 509 of FIG. 12 may transmit an N4 session establishment request message including information making a request for configuring a UPF connection ID to the UPF entity 507. In this case, the information making the request for configuring the UPF connection ID may be information making a request for UPF connection IDs corresponding to a plurality of QUIC connections to be generated according to the number of a plurality of streams.

In operation 1220, the UPF entity 507 may select a UPF connection ID necessary for generating a QUIC connection between the UPF entity 507 and the base station 503, based on the N4 session establishment request message received from the SMF entity 509.

In operation 1225, the UPF entity 507 may transmit an N4 session establishment response message to the SMF entity 509 responding to the N4 session establishment request message. In an example, the N4 session establishment response message may include information on the UPF connection ID selected by the UPF entity 507 in operation 1220. In this case, since the QUIC connection is not generated in the UPF entity in FIG. 12, the N4 session establishment response message may not include information on the gNB connection ID of the base station that may be used for generating the QUIC connection.

In operation 1230, the SMF entity 509 and the AMF entity 505 may transmit and receive a Namf_Communication_N1N2MessageTransfer message. In an example, the Namf_Communication_N1N2MessageTransfer message may include N2 information to be transmitted by the SMF entity 509 to the base station 503. The N2 information may include the information within the SM policy updated by the SMF entity 509 in operation 1210. For example, the N2 information may include the number of streams within the QUIC connection to be generated, and information on a rule for mapping QFIs to stream IDs. In addition, the N2 information may also include a UPF connection ID. For example, the SMF entity 509 may include the UPF connection ID included in the N4 session establishment response message received from the UPF entity 507 in operation 1225 in the N2 information and transmit the same to the base station 503. Meanwhile, the N2 information transmitted by the SMF entity 509 to the base station 503 may be referred to as first N2 information.

In operation 1240, the AMF entity 505 may transmit an N2 PDU session request message including information making a request for an N2 PDU session to the base station 503. In an example, the N2 PDU session request message may include the first N2 information within the Namf_Communication_N1N2MessageTransfer message that the AMF entity 505 received from the SMF entity 509 in operation 1230.

In operation 1245, the base station 503 may exchange specific signaling in association with the information received from the UE 501 and the SMF entity 509. In an example, the base station 503 may transfer the information received from the SMF entity 509 through the AMF entity 505 to the UE.

In operation 1250, a QUIC connection between the UPF entity 507 and an base station 503 may be generated in the QUIC layer of the QUIC protocol within the user plane protocol. In this case, when the UPF connection ID is included in the information received from the SMF entity 509 through the AMF entity 505, the QUIC connection may be generated in the QUIC layer after the base station 503 receives the UPF connection ID. In an example, the base station 503 may allow or reject some QFIs in the list of QFIs, based on the N2 information received from the SMF entity 509. In an example, a QUIC connection may not be generated for a QFI rejected by the base station 503 in the list of QFIs. In addition, a QUIC connection may be generated for a QFI allowed by the base station 503 in the list of QFIs. The generated QUIC connection may correspond to the preconfigured number of streams, and the number of generated QUIC connections may be plural. In the meantime, the gNB connection ID of the base station may be used when the QUIC connection between the UPF entity 507 and the base station 503 is generated. When the number of generated QUIC connections is plural, a set of the UPF connection ID and the gNB connection ID related to each QUIC connection may exist.

In operation 1255, the base station 503 may map the set of the UPF connection ID and the gNB connection ID of the generated QUIC connection to each QFI. For example, the base station 503 may map the set of the UPF connection ID and the gNB connection ID of the generated QUIC connection corresponding to each stream ID to each QFI in the mapping rule of the stream ID and QFI previously received from the SMF entity. When the number of generated QUIC connections is plural, the base station 503 may map the set of the UPF connection ID and gNB connection ID corresponding to each QUIC connection to the QFI identified in operation 1250. For example, as part (c) of FIG. 4, in the PDU session of UE 1, QUIC connections may be generated and operated in accordance with QFI 1 to 3 indicating the QoS between the base station connected to UE 1 and the UPF. A total of 3 QUIC connections may be generated in accordance with QFIs 1 to 3, and each QFI may be mapped to each QUIC connection to operate the PDU session of UE 1.

In operation 1260, the base station 503 may transmit an N2 PDU session response message to the AMF entity 505. The N2 PDU session response message may be a message that the base station 503 has responded to the N2 PDU session request message received from the AMF entity 505 in operation 1240. For example, the N2 PDU session response message may include information indicating that a PDU session transmitted and received via the N2 interface between the base station and the AMF entity has been configured. In addition, N2 information transmitted by the base station 503 to the SMF entity 509 may be included in the N2 PDU session response message. The N2 information transmitted by the base station 503 to the SMF entity 509 may include information on mapping between a QUIC connection and a QFI by the base station 503. The information on the mapping between the QUIC connection and the QFI by the base station may include the result of mapping the set of the UPF connection ID and the gNB connection ID corresponding to each of a plurality of QUIC connections to the QFI in operation 1255. In addition, the N2 information may also include information on the gNB connection ID used when the QUIC connection generated by the base station 503 is generated. For example, when a plurality of QUIC connections are generated, the number of gNB connection IDs may be plural. Meanwhile, the N2 information transmitted by base station 503 to the SMF entity 509 may be referred to as second N2 information.

In operation 1270, the AMF entity 505 may transmit an Nsmf_PDUSession_UpdateSMContext request message to the SMF entity 509. The Nsmf_PDUSession_UpdateSMContext request message may include second N2 information received from the base station 503 by the AMF entity 505 in operation 1260.

In operation 1275, the SMF entity 509 and the UPF entity 507 may perform a procedure of modifying the established N4 session. Specifically, the SMF entity 509 may transmit an N4 session modification request message to the UPF entity 507, and the UPF entity 507 may transmit an N4 session modification response message including result information on the modified N4 session in response thereto. In an example, the N4 session modification request message may include N2 information and the gNB connection ID received from the base station 503 by the SMF entity 509 through the AMF entity 505. The UPF entity 507 may store the result of mapping the set of the UPF connection ID and the gNB connection ID corresponding to the QUIC connection and the QFI, and the gNB connection ID through the N2 information included in the N4 session modification request message received from the SMF entity 509.

Through the procedure of establishing the PDU session based on the QUIC protocol, the SMF entity 509 may perform communication using the QUIC connection, based on the UPF connection ID, the gNB connection ID, and information on the mapping between the QUIC connection and the QFI.

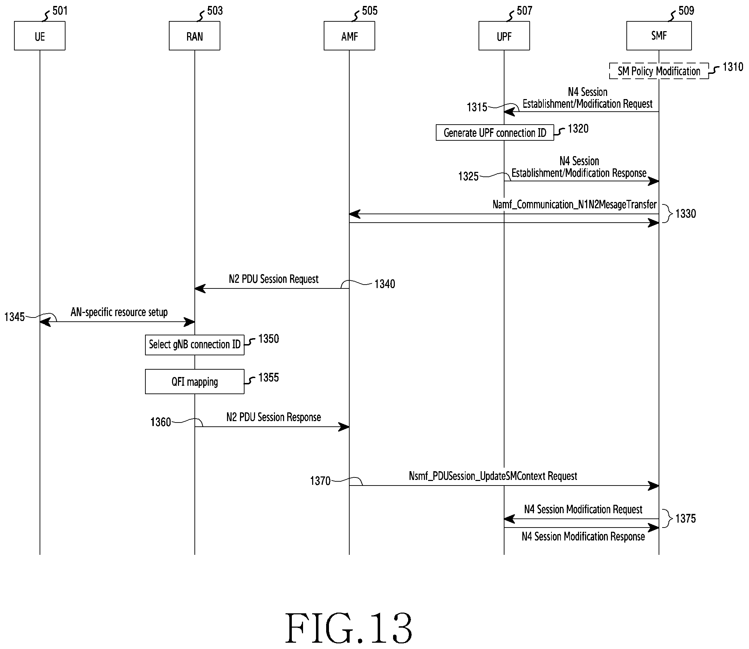

FIG. 13 illustrates an operation of establishing a PDU session according to an embodiment of the disclosure. Specifically, FIG. 13 illustrates a procedure of operating a PDU session by mapping a plurality of QUIC connections according to QFIs when a plurality of QUIC connections using handshake information is generated in the 3GPP without the generation of the QUIC connection in the QUIC layer.

Referring to FIG. 13, in operation 1210, the SMF entity 509 may add information required for establishing the PDU session based on the QUIC protocol to an SM policy. In an example, the information that may be added to the SM policy is described below.
- The number of streams within a QUIC connection
- A mapping rule for a QFI within a QER and a stream ID
- Information on the operation of a PDU session
- Information indicating a QUIC connection

However, the information that may be added to the SM policy is not limited thereto, and information necessary for operating a PDU session based on the QUIC protocol may be further included.

In an example, the information on the operation of the PDU session in FIG. 13 may include information indicating the generation of the QUIC connection by the base station. In addition, in an example, the information indicating the QUIC connection in FIG. 13 may include information indicating to generate a new QUIC connection. The information indicating the QUIC connection in FIG. 13 may include information indicating the generation of a plurality of QUIC connections.

The SMF entity 509 may update the SM policy by adding information necessary for operating the PDU session, based on the QUIC protocol to the SM policy.

In operation 1315, the SMF entity 509 may transmit a N4 session establishment request message to the UPF entity 507, based on the updated SM policy. The N4 session establishment request message may include information making a request for configuring a connection ID (e.g., a UPF connection ID or a gNB connection ID) required to operate the PDU session, based on the QUIC protocol, to the UPF. In an example, the SMF entity 509 of FIG. 13 may transmit an N4 session establishment request message including information making a request for establishing the UPF connection ID to the UPF entity 507. In this case, the information making the request for configuring the UPF connection ID may be information making a request for UPF connection IDs corresponding to a plurality of QUIC connections to be generated according to the number of a plurality of streams.

In operation 1320, the UPF entity 507 may select a UPF connection ID necessary for generating a QUIC connection between the UPF entity 507 and the base station 503, based on the N4 session establishment request message received from the SMF entity 509.

In operation 1325, the UPF entity 507 may transmit an N4 session establishment response message to the SMF entity 509 responding to the N4 session establishment request message. In an example, the N4 session establishment response message may include information on the UPF connection ID selected by the UPF entity 507 in operation 1220. In this case, since the QUIC connection is not generated in the UPF entity in FIG. 13, the N4 session establishment response message may not include information on the gNB connection ID of the base station that may be used for generating the QUIC connection.

According to an embodiment, in FIG. 13, the N4 session establishment response message may additionally include information necessary for a handshake procedure, as well as the UPF connection ID. The handshake procedure may refer to a procedure for setting up link parameters of a communication link in order to allow the communication targets to communicate reliably through a direct link. The information required for the handshake procedure that may be included in the N4 session establishment response message may include the following information. However, the disclosure is not limited thereto.
- Initial Information: may include a source connection ID of the UPF entity and a client Hello message.
- CRYPTO: may include a cryptographic handshake message.
- 0-RTT information: may include data required for 0-RTT handshake connection.

According to an embodiment, the SMF entity 509 and the AMF entity 505 may transmit and receive a Namf_Communication_N1N2MessageTransfer message. In an example, the Namf_Communication_N1N2MessageTransfer message may include N2 information to be transmitted by the SMF entity 509 to the base station 503. The N2 information may include the information within the SM policy updated by the SMF entity 509 in operation 1310. For example, the N2 information may include the number of streams within the QUIC connection to be generated, and information on a rule for mapping QFIs to stream IDs. In addition, the N2 information may also include the UPF connection ID and the information required for the handshake procedure (e.g., initial information, CRYPTO, 0-RTT information, and the like). For example, the SMF entity 509 may include the UPF connection ID included in the N4 session establishment response message received from the UPF entity 507 in operation 925 and the information required for the handshake procedure in the N2 information and transmit the same to the base station 503. Meanwhile, the N2 information transmitted by the SMF entity 509 to the base station 503 may be referred to as first N2 information.

In operation 1340, the AMF entity 505 may transmit an N2 PDU session request message including information making a request for an N2 PDU session to the base station 503. In an example, the N2 PDU session request message may include the first N2 information in the Namf_Communication_N1N2MessageTransfer message that the AMF entity 505 received from the SMF entity 509.

In operation 1345, the base station 503 may exchange specific signaling in association with the information received from the UE 501 and the SMF entity 509. In an example, the base station 503 may transfer the information received from the SMF entity 509 through the AMF entity 505 to the UE.

In operation 1350, the base station 503 may receive a list of QFIs, based on the N2 information received from the SMF entity 509. The base station 503 may allow or reject some QFIs in the received list of QFIs. In an example, the stream ID may not be mapped to the QFI rejected by the base station 503 in the list of QFIs. In addition, the stream ID may be mapped to a QFI allowed by the base station 503 in the list of QFIs.

According to an embodiment, the base station 503 may generate a QUIC connection within the 3GPP, based on the UPF connection ID received from the SMF entity 509 through the AMF entity 505 and the information required for the handshake. In this case, the QUIC connection may not be generated in the QUIC layer, and the information required for the QUIC connection may be transferred to the base station 503 so that the QUIC connection may be generated within the 3GPP. The generated QUIC connection may correspond to the preconfigured number of streams, and the number of generated QUIC connections may be plural. In the meantime, the gNB connection ID of the base station may be used when the QUIC connection between the UPF entity 507 and the base station 503 is generated. The base station 503 may select a gNB connection ID configured for the QUIC connection, based on the QUIC connection generated within the 3GPP. When the number of generated QUIC connections is plural, a set of the UPF connection ID and the gNB connection ID related to each QUIC connection may exist.

In operation 1355, the base station 503 may map the gNB connection ID of the QUIC connection generated within the 3GPP to each QFI. For example, the base station 503 may map the gNB connection ID of the generated QUIC connection corresponding to each stream ID to each QFI in the mapping rule for the stream ID and QFI previously received from the SMF entity. When the number of generated QUIC connections is plural, the base station 503 may map the gNB connection ID set corresponding to each QUIC connection to the QFI identified in operation 1350. For example, as part (c) of FIG. 4, in the PDU session of UE 1, QUIC connections may be generated and operated in accordance with QFI 1 to 3 indicating the QoS between the base station connected to UE 1 and the UPF. A total of 3 QUIC connections may be generated in accordance with QFIs 1 to 3, and each QFI may be mapped to each QUIC connection to operate the PDU session of UE 1 .

In operation 1360, the base station 503 may transmit an N2 PDU session response message to the AMF entity 505. The N2 PDU session response message may be a message that the base station 503 has responded to the N2 PDU session request message received from the AMF entity 505 in operation 1340. For example, the N2 PDU session response message may include information indicating that a PDU session transmitted and received via the N2 interface between the base station and the AMF entity has been configured. In addition, N2 information transmitted by the base station 503 to the SMF entity 509 may be included in the N2 PDU session response message. The N2 information transmitted by the base station 503 to the SMF entity 509 may include information on mapping between a gNB connection ID and a QFI by the base station 503. The information on the mapping between the QUIC connection and the QFI by the base station 503 may include the result of mapping the gNB connection ID corresponding to each of a plurality of QUIC connections to the QFI in operation 1355. In addition, the N2 information may include handshake information related to the QUIC connection in association with the QUIC connection generated inside 3GPP. The handshake information related to the QUIC connection may include the following information. However, the disclosure is not limited thereto.
- Initial Information: may include a server Hello message.
- CRYPTO: may include a cryptographic handshake message.
- 1-RTT information: may include data required for 1-RTT handshake connection.
- Handshake Information: may include a gNB connection ID selected by the base station when a QUIC connection is generated within the 3GPP.
- ACK frame: may include information for acknowledging reception of a client Hello message.

Information on the gNB connection ID selected by the base station 503 may also be included. Meanwhile, the N2 information transmitted by base station 503 to the SMF entity 509 may be referred to as second N2 information.

In operation 1370, the AMF entity 505 may transmit an Nsmf_PDUSession_UpdateSMContext request message to the SMF entity 509. The Nsmf_PDUSession_UpdateSMContext request message may include second N2 information received from the base station 503 by the AMF entity 505.

In operation 1375, the SMF entity 509 and the UPF entity 507 may perform a procedure of modifying the established N4 session. Specifically, the SMF entity 509 may transmit an N4 session modification request message to the UPF entity 507, and the UPF entity 507 may transmit an N4 session modification response message including result information on the modified N4 session in response thereto. In an example, the N4 session modification request message may include N2 information (e.g., the mapping result between a gNB connection ID and a QFI, and handshake information related to the QUIC connection) received by the SMF entity 509 from the base station 503 through the AMF entity 505. The UPF entity 507 may store the mapping result of the stream ID and the QFI, and handshake information related to the QUIC connection through the N2 information included in the N4 session modification request message received from the SMF entity 509.

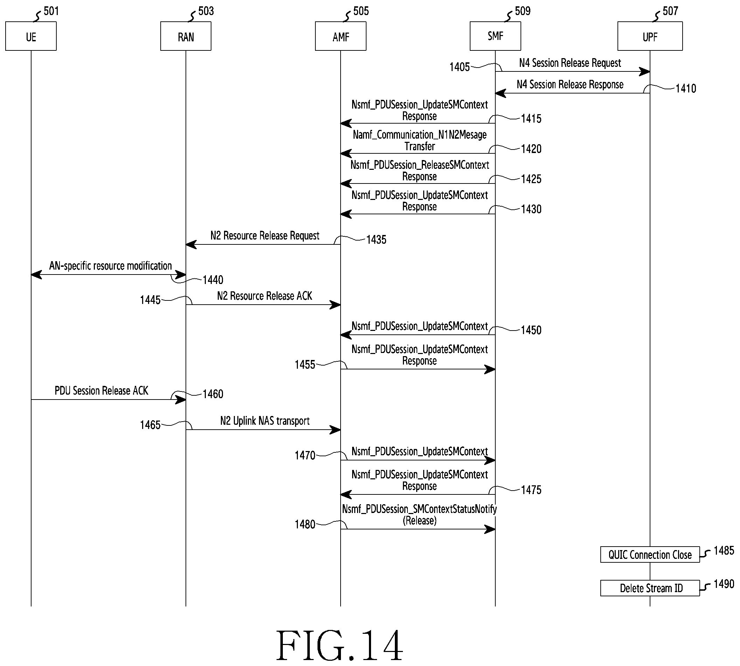

FIG. 14 illustrates an operation of releasing a PDU session according to an embodiment of the disclosure. Specifically, the operation of releasing the QUIC connection (or a PDU session based on the QUIC protocol) is illustrated.

According to an embodiment, a procedure for releasing a PDU session based on the QUIC protocol may differ according to a case in which a PDU session associated with one UE is operated for each QUIC connection (e.g., the PDU session operation method of part (a) of FIG. 4 and part (c) of FIG. 4) and a case in which one QUIC connection operates a PDU session associated with a plurality of UEs (e.g., the PDU session operation method of part (b) of FIG. 4). Operation 1405 to operation 1480 of FIG. 14 may be operations within the procedure for releasing the PDU session in a basic 5G communication network. Operation 1485 and operation 1490 operate as different embodiments and do not operate together.

According to an embodiment, when a PDU session associated with one UE is operated for each QUIC connection (e.g., the PDU session operation method of part (a) of FIG. 4 and part (c) of FIG. 4), the method of releasing the PDU session may be subdivided into two methods. Specifically, the first PDU session release method may be a method of terminating the QUIC connection in the QUIC layer. The second PDU session release method may be a method of including connection close information for terminating the QUIC connection in an N4 session release response message transmitted by the UPF entity to the SMF entity and transmitting the same. The N4 session release response message may be a message for responding to the N4 session release request message received by the UPF entity from the SMF entity.

The first PDU session release method may refer to a method of terminating a QUIC connection including a UPF connection ID and a gNB connection ID associated with the PDU session released in the QUIC layer when, for example, a basic PDU session release procedure (e.g., operations 1405 to 1480) is all completed. For example, after the basic PDU session release procedure in operation 1405 to operation 1480 is completed in FIG. 14, the UPF entity 507 may indicate the termination of the QUIC connection in the QUIC layer in operation 1485. For example, when the PDU session in FIG. 5 is released, after the basic PDU session release procedure is completed, the UPF entity 507 may indicate termination of one QUIC connection including the UPF connection ID and the gNB connection ID in the QUIC layer.

Meanwhile, when the number of QUIC connections is plural, the first PDU session release method may refer to a method of terminating all the respective QUIC connections including the set of UPF connection IDs and gNB connection IDs associated with the PDU session released in the QUIC layer when the basic PDU session release procedure is all completed. For example, when the PDU session in FIG. 12 is released, after the basic PDU session release procedure is completed, the UPF entity 507 may indicate termination of the plurality of QUIC connections including the set of UPF connection IDs and gNB connection IDs in the QUIC layer.

The second PDU session release method may refer to a method in which, for example, information indicating termination of QUIC connections is included in information transmitted and received in the basic PDU session release procedure. For example, referring to FIG. 14, when the UPF entity 507 responds to the N4 session release request message (operation 1405) received from the SMF entity 509 in operation 1410 and transmits an N4 session release response message, the UPF entity 507 may include information for terminating the QUIC connection in the N4 session release response message. The information for terminating the QUIC connection may refer to connection close information for terminating the QUIC connection. Thereafter, the SMF entity 509 may transfer the connection close information included in the N4 session release response message from the AMF entity 505 to the base station 503 through operations 1415 to 1435. The base station 503 receiving the connection close information of the UPF entity 507 may terminate the QUIC connection and transmit the connection close information indicating the termination of the QUIC connection of the base station 503 to the AMF entity 509 through operations 1445 to 1450. Thereafter, the SMF entity 509 may transfer the connection close information to the UPF entity 507.

Meanwhile, when the number of QUIC connections is plural, the second PDU session release method may refer to a method in which, for example, information indicating the termination of all QUIC connections to be released is included in information transmitted and received in the basic PDU session release procedure. For example, when the PDU session in FIG. 12 is released, the information transmitted and received in the basic PDU session release procedure may include information indicating termination of a plurality of QUIC connections including the set of UPF connection IDs and gNB connection IDs.

According to an embodiment, when one UQIC connection operates a PDU session associated with a plurality of UEs (e.g., the PDU session operation method in part (b) of FIG. 4), the method of releasing the PDU session may refer to a method of deleting the stream ID of the UPF connection ID and the gNB connection ID corresponding to the QUIC connection to be released in the QUIC layer when all basic PDU session release procedures (e.g., operations 1405 to 1480) are completed. For example, after the basic PDU session release procedure in operation 1405 to operation 1480 is completed in FIG. 14, the UPF entity 507 may indicate the deletion of the stream ID of the UPF connection ID and the gNB connection ID corresponding to the QUIC connection in the QUIC layer in operation 1490. For example, when the PDU session in FIG. 6 is released, after the basic PDU session release procedure is completed, the UPF entity 507 may indicate the deletion of the UPF connection ID and the gNB connection ID in the QUIC layer.

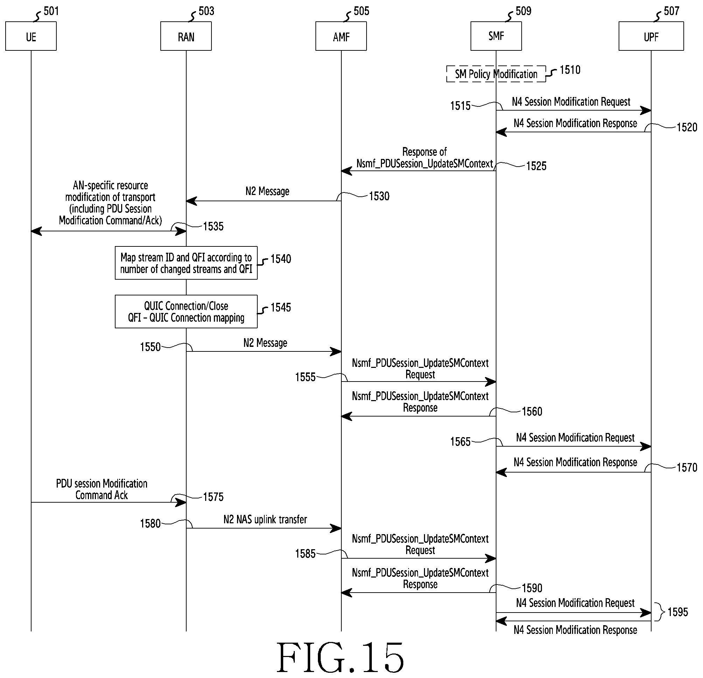

FIG. 15 illustrates an operation of modifying a PDU session according to an embodiment of the disclosure. Operations 1510 to 1535 and operations 1550 to 1590 of FIG. 15 may be operations performed during the general PDU session modification procedure.

When a QFI within a QER is changed, the SM policy may update information including a mapping rule of changed streams and QFIs and information on the number of changed streams. In this case, a procedure of modifying the PDU session may vary depending on a method of operating the PDU session.

According to an embodiment, when a PDU session associated with one UE is operated in one QUIC connection (e.g., the PDU session operation method in part (a) of FIG. 4) or a PDU session associated with a plurality of UEs is operated in one QUIC connection (e.g., part (b) of FIG. 4), the base station may newly generate a stream ID, based on information on a modified PDU session received from the SMF entity, and re-map the same to a QFI. For example, referring to FIG. 15, the SMF entity 509 may change some of the information in the SM policy to information on the number of changed streams and information on a mapping rule of a stream ID of the changed stream and a QFI according to the PDU session changed in operation 1510. Thereafter, in operations 1525 to 1530, the SMF entity 509 may transmit an N2 information message including information on the number of changed streams and information on the mapping rule of the stream ID of the changed stream and the QFI to the base station 503 through the AMF entity 505. Thereafter, the base station 503 may regenerate the stream ID, based on the received number of changed streams and the information on the mapping rule of the stream ID of the changed stream and the QFI, and may remap the generated stream ID to the QFI. The base station 503 may transfer, to the UPF entity 507, the mapping result information of the remapped stream ID and QFI in association with the modified PDU session, through operations 1550 to 1565. The UPF entity 507 may newly store the mapping result information of the remapped stream ID and QFI received from the base station 503.

According to an embodiment, when the PDU session associated with one UE is operated (e.g., the PDU session operation method of part (c) of FIG. 4) for each of a plurality of QUIC connections and the QUIC connection is generated in the QUIC layer, the base station may make a request for terminating the generated existing QUIC connection, based on the information on the modified PDU session received from the SMF entity, and make a request for generating a new QUIC connection. For example, referring to FIG. 15, the SMF entity 509 may change some of the information in the SM policy to information on the number of changed streams and information on a mapping rule of a stream ID and a QFI of the changed stream according to the PDU session modified in operation 1510. Thereafter, in operations 1525 to 1530, the SMF entity 509 may transmit an N2 information message including information on the number of changed streams and information on the mapping rule of the stream ID of the changed stream and the QFI to the base station 503 through the AMF entity 505. Thereafter, the base station 503 may make a request for terminating the existing QUIC connection, and may make a request for generating a new QUIC connection, based on the received information on the number of changed streams and the information on the mapping rule of the stream ID of the changed stream and the QFI. In this case, the number of QUIC connections requested to be terminated or generated may be plural. The base station may remap the set of the UPF connection ID and gNB connection ID associated with the new QUIC connection and the QFI. The base station 503 may transfer, to the UPF entity 507, the mapping result information of the set of the UPF connection ID and the gNB connection ID and QFI associated with the new QUIC connection, which have been remapped in association with the modified PDU session, through operations 1550 to 1565. The UPF entity 507 may newly store the mapping result information received from the base station 503.

According to an embodiment, when the PDU session associated with one UE is operated for each of a plurality of QUIC connections (e.g., the PDU session operation method of part (c) of FIG. 4), and the QUIC connection is generated in the 3GPP by using handshake information, the base station may reselect a gNB connection ID according to a changed QFI, based on information on the modified PDU session received from the SMF entity. For example, referring to FIG. 15, the SMF entity 509 may change some of the information in the SM policy to information on the number of changed streams and information on a mapping rule of a stream ID and a QFI of the changed stream according to the PDU session modified in operation 1510. Thereafter, in operations 1525 to 1530, the SMF entity 509 may transmit an N2 information message including information on the number of changed streams and information on the mapping rule of the stream ID of the changed stream and the QFI to the base station 503 through the AMF entity 505. The base station 503 may reselect the gNB connection ID according to the changed QFI and include the same in the QUIC frame information for the QUIC connection. In this case, when the number of QUIC connections is plural, the number of reselected gNB connection IDs may also be plural. Thereafter, the base station 503 may map the reselected gNB connection ID and the QFI. The base station 503 may transfer, to the UPF entity 507, the mapping result information of the reselected gNB connection ID and the QFI remapped in association with the modified PDU session through operations 1550 to 1565. In addition, the information transferred to the UPF entity 507 through operations 1550 to 1565 may include handshake information (e.g., Initial Information, CRYPTO, 0-RTT information) based on the information on the modified PDU session. The UPF entity 507 may newly store the mapping result information and the handshake information received from the base station 503. The handshake information based on the information on the modified PDU session may be information necessary for a handshake procedure for a new QUIC connection in consideration of the possibility of occurrence of the new QUIC connection.

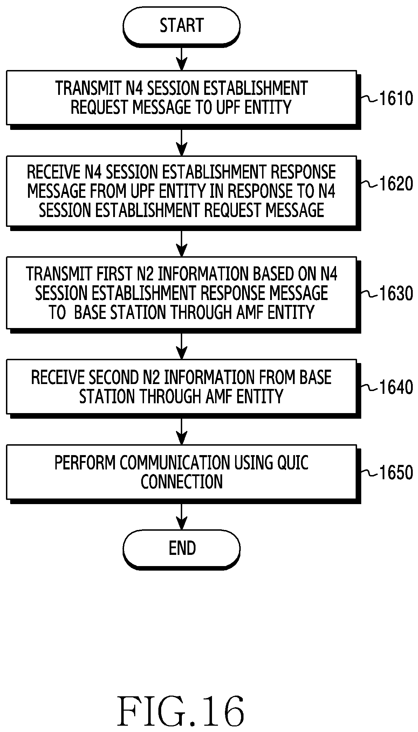

FIG. 16 illustrates an operation for establishing a PDU session by a session management function (SMF) entity according to an embodiment of the disclosure. Specifically, FIG. 16 illustrates an operation of the SMF entity for establishing a PDU session based on a QUIC protocol.

The SMF entity may add information necessary to establish the PDU session based on the QUIC protocol to an SM policy before operation 1610. In an example, the information that may be added to the SM policy is described below.
- The number of streams within a QUIC connection
- A mapping rule for a QFI within a QER and a stream ID
- Information on the operation of a PDU session
- Information indicating a QUIC connection

However, the information that may be added to the SM policy is not limited thereto, and information necessary for operating a PDU session based on the QUIC protocol may be further included.

Information on the number of streams in the QUIC connection may indicate the number of streams in the QUIC connection to be mapped to the QFI of the PDU session. Information on a rule for mapping the QFI in the QER and the stream ID may indicate a rule for using a stream within a QUIC connection for a QFI of the PDU session. In an example, the information on the rule for mapping the QFI and the stream ID may indicate information that maps the QFI and the stream ID in a one-to-one (1:1) or many-to-one (N:1) manner. For example, the information on the rule for mapping the QFI and the stream ID may include information indicating mapping between stream ID 1 and QFI 1 and between stream ID 2 and QFIs 2 and 3 with respect to the two streams in the QUIC connection. Meanwhile, when the information on the rule for mapping the QFI and the stream ID indicates information for mapping QFIs and stream IDs in many-to-one manner, it may be necessary to transmit data through modification of the QUIC header by utilizing the characteristic that the QUIC protocol is a protocol of the user plane. The information on the operation of the PDU session may include information indicating an operation method among various methods of establishing the PDU session. For example, it may indicate a QUIC connection in the UPF entity or a QUIC connection in the gNB.

The information indicating the QUIC connection may include information indicating whether to use the pre-established QUIC connection or to generate a new QUIC connection.

Subsequently, in operation 1610, the SMF entity may transmit an N4 session establishment request message to the UPF entity. According to an embodiment, the SMF entity may include information making a request for configuring a connection ID (e.g., a UPF connection ID or a gNB connection ID) required for operating the PDU session to the UPF entity, based on the QUIC protocol, in the N4 session establishment request message.

In addition, the N4 session establishment request message may include information on the SM policy updated by the SMF entity. For example, the N4 session establishment request message may include the number of streams in a QUIC connection, a rule for mapping a QFI to a stream ID, information on the operation of a PDU session, and information on a QUIC connection.

In operation 1620, the SMF entity may receive an N4 session establishment response message from the UPF entity in response to the N4 session establishment request message.

According to an embodiment, when a QUIC connection is generated in the UPF entity, the N4 session establishment response message may include a UPF connection ID selected by the UPF entity and a gNB connection ID based on a QUIC connection generated by the UPF entity. The UPF entity may select a UPF connection ID required to generate a QUIC connection, based on the N4 session establishment request message received from the SMF entity. In an example, the UPF entity may select a UPF connection ID in the information making a request for configuring the UPF connection ID included in the N4 session establishment request message. The QUIC connection between the UPF entity and the base station may be generated in the QUIC layer of the QUIC protocol in the user plane protocol. In this case, the QUIC connection in the QUIC layer may be generated when UPF connection ID is not transmitted to the base station. In the meantime, the gNB connection ID of the base station may be used when the QUIC connection between the UPF entity and the base station is generated.

In addition, according to an embodiment, when the QUIC connection is generated by the base station, the N4 session establishment response message may include the UPF connection ID selected by the UPF entity. The UPF entity may select a UPF connection ID required to generate a QUIC connection, based on the N4 session establishment request message received from the SMF entity. Since the QUIC connection is not generated by the UPF entity, the N4 session establishment response message may not include information on the gNB connection ID of the base station that may be used for generating the QUIC connection.

In operation 1630, the SMF entity may transmit first N2 information based on the N4 session establishment response message to the base station through the AMF entity. The first N2 information may refer to information associated with the N2 session and the QUIC connection transmitted by the SMF entity to the base station. In an example, the first N2 information may include information within the SM policy updated by the SMF entity. For example, the first N2 information may include the number of streams within the QUIC connection to be generated, and information on a rule for mapping QFIs to stream IDs.

According to an embodiment, when the QUIC connection is generated by the UPF entity, the first N2 information may also include a UPF connection ID and a gNB connection ID. For example, in FIG. 5, the SMF entity may include the UPF connection ID and the gNB connection ID included in the N4 session establishment response message received from the UPF entity in first N2 information and transmit the same to the base station.

In addition, according to an embodiment, when the QUIC connection is generated by the base station, the UPF connection ID may also be included in the first N2 information. For example, in FIG. 7, the SMF entity may include the UPF connection ID included in the N4 session establishment response message received from the UPF entity in the first N2 information and transmit the same to the base station.

Furthermore, according to an embodiment, the first N2 information may include information necessary for handshake for generating the QUIC connection. The information necessary for handshake may include at least one of Initial Information, CRYPTO, 0-RTT Information, Handshake Information, and an ACK frame for communicating with the UPF entity or the base station.

In operation 1640, the SMF entity may receive second N2 information from the base station through the AMF entity. The second N2 information may refer to information associated with the N2 session and the QUIC connection transmitted by the base station to the SMF entity through the AMF entity. In an example, the second N2 information may include information indicating mapping between the stream ID and the QFI by the base station. The information indicating the mapping between the stream ID and the QFI by the base station may include a result of mapping between the stream ID and the QFI by the base station according to the mapping rule. The QFI mapped with the stream ID by the base station according to the mapping rule may indicate an allowed QFI in the list of QFIs received by the base station from the AMF entity. In addition, the second N2 information may include information on a rejected QFI in the list of QFIs received by the base station from the AMF entity.

According to an embodiment, when the QUIC connection is generated by the base station, the gNB connection ID may also be included in the second N2 information. For example, in FIG. 7, the base station may include the gNB connection ID in the second N2 information and transmit the same to the SMF entity through the AMF entity.

In addition, according to an embodiment, the second N2 information may include the mapping result between set of the UPF connection ID and the gNB connection ID corresponding to each of a plurality of QUIC connections and a QFI.

Further, according to an embodiment, the second N2 information may include handshake information related to the QUIC connection in association with the QUIC connection generated in the 3GPP network. The handshake information related to the QUIC connection may include Initial Information, CRYPTO, 1-RTT Information, Handshake Information, an ACK frame, and the like. However, the disclosure is not limited thereto.

In operation 1650, the SMF entity may perform communication by using the QUIC connection. The SMF entity may operate a PDU session based on the QUIC protocol through information associated with the QUIC connection received through the UPF entity and the base station. Through this, the SMF entity may perform communication using the QUIC connection.

According to an embodiment, streams may be allocated for each QoS within a single PDU session, and data transmission and reception may be controlled for each stream. Accordingly, even if retransmission of data in one stream among the plurality of streams occurs, data transmission and reception through a stream in which no retransmission occurs within the same PDU session may be maintained. That is, the data may be transmitted and received while maintaining continuity without interruption. In addition, when communication is performed using the QUIC protocol, data traffic may be easily managed separately even when an XR, VR, or metaverse application having a large difference in characteristics between data traffic is used.

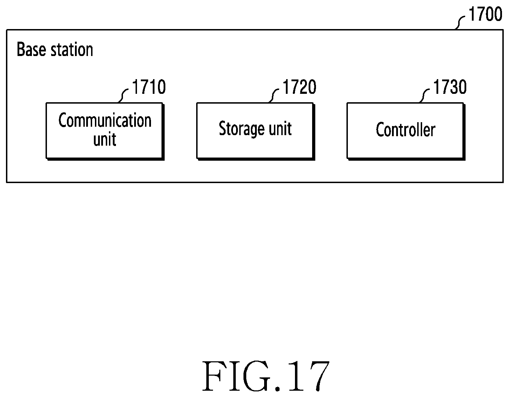

FIG. 17 illustrates a structure of a base station according to an embodiment of the disclosure.

Referring to FIG. 17, the base station 1700 includes a communication unit 1710, a storage 1720, and a controller 1730.

The communication unit 1710 performs functions for transmitting/receiving signals through a radio channel. For example, the communication unit 1710 performs functions of conversion between baseband signals and bitstrings according to the physical layer specifications of the system. For example, during data transmission, the communication unit 1710 generates complex symbols by encoding and modulating a transmission bitstream. In addition, during data reception, the communication unit 1710 demodulates and decodes a baseband signal to restore a received bitstring. In addition, the wireless communication unit 1710 up-converts a baseband signal to a radio frequency (RF) band signal, transmits the up-converted RF band signal via an antenna, and then down-converts the RF band signal received via the antenna to a baseband signal.

To this end, the wireless communication unit 1710 may include a transmission filter, a reception filter, an amplifier, a mixer, an oscillator, a digital to analog converter (DAC), an analog to digital converter (ADC), and the like. In addition, the communication unit 1710 may include multiple transmission/reception paths. Furthermore, the wireless communication unit 1710 may include at least one antenna array including multiple antenna elements. In terms of hardware, the wireless communication unit 1710 may include a digital unit and an analog unit, and the analog unit may include multiple sub-units according to operation power, frequencies, etc.

The communication unit 1710 may transmit/receive signals. To this end, the communication unit 1710 may include at least one transceiver. For example, the communication unit 1710 may transmit a synchronization signal, a reference signal, system information, a message, control information, data, or the like. Furthermore, the communication unit 1710 may perform beamforming.

The communication unit 1710 transmits and receives signals as described above. Accordingly, all or part of the communication unit 1710 may be referred to as a "transmitter", a "receiver", or a "transceiver". In addition, as used in the following description, the meaning of "transmission and reception performed through a radio channel" includes the meaning that the above-described processing is performed by the communication unit 1710.

The storage 1720 may store basic programs, application programs, and data, such as configuration information, for operation of the main base station. The storage 1720 may include a memory. The storage 1720 may include a volatile memory, a nonvolatile memory, or a combination of a volatile memory and a nonvolatile memory. In addition, the storage 1720 provides the stored data at the request of the controller 1730.

The controller 1730 controls the overall operation of the base station 1700. For example, the controller 1730 transmits/receives signals through the communication unit 1710. In addition, the controller 1730 records data in the storage 1720 and reads the data from the storage 1720. Furthermore, the controller 1730 may perform functions of protocol stacks required by communication specifications. To this end, the controller 1730 may include at least one processor.

The structure of the base station 1700 illustrated in FIG. 17 is a merely an example of the base station, and examples of the base station for performing various embodiment of the disclosure are not limited to the structure illustrated in FIG. 17. That is, some components may be added, omitted, or changed according to various embodiments.

In FIG. 17, the base station 1700 has been described as a single entity, but the disclosure is not limited thereto. In addition to the integrated deployment, the base station 1700 according to various embodiments of the disclosure may be implemented to construct an access network having a distributed deployment. According to an embodiment, the base station may be divided into a central unit (CU) and a digital unit (DU), the CU may be implemented to perform upper layer functions (e.g., packet data convergence protocol (PDCP) and RRC), and the DU may be implemented to perform lower layer functions (e.g., medium access control (MAC) and physical (PHY)). The DU of the base station may form beam coverage on a radio channel.

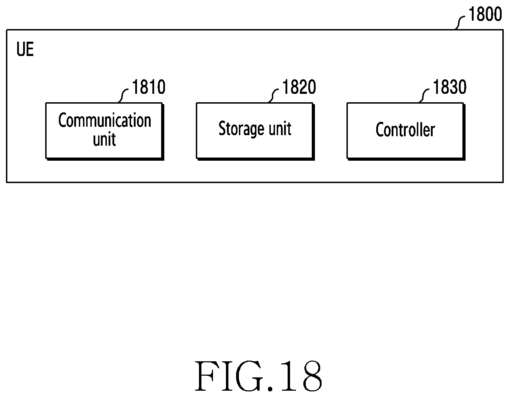

FIG. 18 illustrates a structure of a UE 1800 according to an embodiment of the disclosure.

The structure illustrated in FIG. 18 may be understood as a structure of the UE 1800. As used herein, such terms as "... unit" and "... er" refer to a unit configured to process at least one function or operation, and may be implemented as hardware, software, or a combination of hardware and software.

Referring to FIG. 18, the UE may include a communication unit 1810, a storage 1820, and a controller 1830.

The communication unit 1810 performs functions for transmitting/receiving signals through a radio channel. For example, the communication unit 1810 performs functions of conversion between baseband signals and bitstrings according to the physical layer specifications of the system. For example, during data transmission, the communication unit 1810 generates complex symbols by encoding and modulating a transmission bitstream. In addition, during data reception, the communication unit 1810 demodulates and decodes a baseband signal to restore a received bitstring. In addition, the communication unit 1810 up-converts a baseband signal to an RF band signal, transmits the same through an antenna, and down-converts an RF band signal received through the antenna to a baseband signal. For example, the communication unit 1810 may include a transmission filter, a reception filter, an amplifier, a mixer, an oscillator, a DAC, and an ADC.

In addition, the communication unit 1810 may include multiple transmission/reception paths. Furthermore, the communication unit 1810 may include an antenna unit. The communication unit 1810 may include at least one antenna array configured by multiple antenna elements. In terms of hardware, the communication unit 1810 may include a digital circuit and an analog circuit (e.g., a radio frequency integrated circuit (RFIC)). The digital circuit and the analog circuit may be implemented as a single package. In addition, the communication unit 1810 may include multiple RF chains. The communication unit 1810 may perform beamforming. In order to assign directivity based on configurations of the controller 1830 to a signal to be transmitted/received, the communication unit 1810 may apply a beamforming weight to the signal. According to an embodiment, the communication unit 1810 may include a radio frequency (RF) block (or RF unit). The RF block may include first RF circuitry related to antennas and second RF circuitry related to baseband processing. The first RF circuitry may be referred to as an RF-antenna (RF-A). The second RF circuitry may be referred to as an RF-baseband (RF-B).

In addition, the communication unit 1810 may transmit/receive signals. To this end, the communication unit 1810 may include at least one transceiver. In addition, the communication unit 1810 may receive a downlink signal. The downlink signal may include a synchronization signal (SS), a reference signal (RS) (e.g., demodulation (DM)-RS or phase tracking reference signal (PTRS)), system information (e.g., MIB, SIB, remaining system information (RMSI), or other system information (OSI)), a configuration message, control information, downlink data, or the like. The communication unit 1810 may transmit an uplink signal. The uplink signal may include a random access-related signal (e.g., random access preamble (RAP) (or message 1 (Msg1), message 3 (Msg3)), a reference signal (e.g., sounding reference signal (SRS), DMRS, or PTRS), a power headroom report (PHR), or the like.

In addition, the communication unit 1810 may include different communication modules for processing signals in different frequency bands. Furthermore, the communication unit 1810 may include multiple communication modules in order to support multiple different radio access techniques. For example, different radio access technologies may include Bluetooth low energy (BLE), wireless fidelity (Wi-Fi), Wi-Fi gigabyte (WiGig), cellular networks (e.g., long-term evolution (LTE)), new radio (NR), and the like. Also, the different frequency bands may include super high frequency (SHF) bands (e.g., 2.5GHz or 5GHz bands), millimeter wave (mmWave) bands (e.g., 38GHz or 60GHz bands), and the like. In addition, the communication unit 1810 may use a radio-access technology of the same scheme on different frequency bands (e.g., an unlicensed band for licensed assisted access (LAA) and a citizen broadband radio service (CBRS) (e.g., 3.5GHz)).

The communication unit 1810 transmits and receives signals as described above. Accordingly, all or part of the communication unit 1810 may be referred to as a "transmitter", a "receiver", or a "transceiver". In addition, as used in the following description, the meaning of "transmission and reception performed through a radio channel" includes the meaning that the above-described processing is performed by the communication unit 1810.

The storage 1820 may store basic programs, application programs, and data, such as configuration information, for operation of the main base station. The storage 1820 may include a volatile memory, a nonvolatile memory, or a combination of a volatile memory and a nonvolatile memory. In addition, the storage unit 1820 provides stored data in response to the request of the controller 1830.

The controller 1830 controls the overall operation of the UE 1800. For example, the controller 1830 transmits/receives signals through the communication unit 1810. In addition, the controller 1830 records data in the storage 1820 and reads the data from the storage 1820. In addition, the controller 1830 may perform functions of protocol stacks required by communication specifications. To this end, the controller 1830 may include at least one processor. The controller 1830 may include at least one processor or micro-processor, or may be a part of a processor. In addition, a part of the communication unit 1810 and the controller 1830 may be referred to as a communication processor (CP). The controller 1830 may include various modules for performing communication. According to various embodiments, the controller 1830 may control the UE to perform operations according to various embodiments.

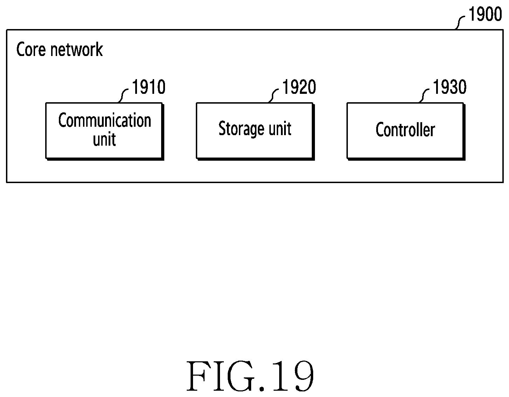

FIG. 19 illustrates a structure of a network entity 1900 according to an embodiment of the disclosure.

The network entity according to an embodiment of the disclosure may include a processor 1920 which controls the overall operation of the network entity, a transceiver 1900 which includes a transmitter and a receiver, and a memory 1910. Of course, the example given above is not limiting, and the network entity may include a smaller or larger number of components than the components illustrated in FIG. 19.

According to an embodiment of the disclosure, the transceiver 1900 may transmit/receive signals with at least one of other network entities or UEs. The signals transmitted/received with at least one of other network entities or UEs may include control information and data.

According to an embodiment of the disclosure, the processor 1920 may control the network entity to perform operations according to any one of the above-described embodiments. Of course, the processor 1920, the memory 1910, and the transceiver 1900 are not necessarily implemented as separate modules, but may be implemented as a single component unit such as a single chip. Also, the processor 1920 and the transceiver 1900 may be electrically connected to each other. In addition, the processor 1920 may be an application processor (AP), a communication processor (CP), a circuit, an application-specific circuit, or at least one processor.

According to an embodiment of the disclosure, the memory 1910 may store data such as basic programs for operations of the network entity, application programs, and configuration information. In particular, the memory 1910 provides the stored data at the request of the processor 1920. The memory 1910 may include storage media such as a ROM, a RAM, a hard disk, a CD-ROM, and a DVD, or a combination of storage media. In addition, the memory 1910 may include multiple memories. Furthermore, the processor 1920 may perform the above-described embodiments of the disclosure, based on the programs for performing the embodiments, stored in the memory 1910.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. Also, the above respective embodiments may be employed in combination, as necessary. For example, the methods proposed in the disclosure may be partially combined with each other to operate a network entity and a terminal. Moreover, although the above embodiments have been described based on the FDD LTE system, other variants based on the technical idea of the embodiments may also be implemented in other communication systems such as TDD LTE, and 5G, or NR systems.

As described above, a method using a QUIC connection to establish a PDU session by an SMF entity in a wireless communication system according to various embodiments of the disclosure may include an operation of transmitting an N4 session establishment request message to a UPF entity, an operation of receiving an N4 session establishment response message from the UPF entity in response to the N4 session establishment request message, an operation of transmitting first N2 information based on the N4 session establishment response message to a base station through an AMF entity, an operation of receiving second N2 information from the base station through the AMF entity, and an operation of performing communication by using the QUIC connection.

According to various embodiments of the disclosure, when the QUIC connection is generated by the UPF entity, the N4 session establishment response message may include the UPF connection ID selected by the UPF entity and a gNB connection ID based on the QUIC connection generated by the UPF entity.

According to various embodiments of the disclosure, when the QUIC connection is generated by the base station, the N4 session establishment response message may include the UPF connection ID selected by the UPF entity, and the second N2 information may include a gNB connection ID based on the QUIC connection generated by the base station.

According to various embodiments of the disclosure, the first N2 information may include information required for handshake for generating the QUIC connection, the information required for the handshake may include at least one of Initial Information, CRYPTO, 0-RTT Information, Handshake Information, and ACK frame for communicating with the UPF entity or the base station, and the second N2 information may include handshake result information.

According to various embodiments of the disclosure, the method may further include an operation of providing information indicating to use a pre-generated QUIC connection through the N4 session establishment request message, and the first N2 information may include a UPF connection ID and a gNB connection ID corresponding to the pre-generated QUIC connection.

According to various embodiments of the disclosure, one QUIC connection may be allocated to one UE, the one UQIC connection may include a plurality of streams, and the plurality of streams may correspond to different stream IDs.

According to various embodiments of the disclosure, one QUIC connection may be allocated to a plurality of UEs, the one QUIC connection may include a plurality of streams, the plurality of streams may correspond to different stream IDs, and a first stream of the plurality of streams may be allocated to a first UE and a second stream may be allocated to a second UE.

According to various embodiments of the disclosure, a plurality of QUIC connections may be allocated to one UE and correspond to a plurality of streams, respectively.

According to various embodiments of the disclosure, one QUIC connection may be allocated to a plurality of UEs, the one QUIC connection may include a plurality of streams, the plurality of streams may correspond to different stream IDs, and a first stream of the plurality of streams may be allocated to a first UE and a second stream may be allocated to a second UE.

According to various embodiments of the disclosure, a plurality of QUIC connections may be allocated to one UE and correspond to a plurality of streams, respectively.

According to various embodiments of the disclosure, the method may include an operation of changing an SM policy for a QUIC connection, the operation of changing the SM policy may include an operation of updating the SM policy by adding at least one of a mapping rule of a stream ID and a QFI, information on the operation of an N4 session, or information indicating a QUIC connection, and the N4 session establishment request message may be transmitted based on the updated SM policy.

According to various embodiments of the disclosure, the method may further include an operation of transmitting third N2 information including at least one of information on the number of changed streams and a changed mapping rule of the stream ID and the QFI to the base station through the AMF entity and an operation of receiving fourth N2 information from the base station through the AMF entity, and the third N2 information may include at least one of information on the number of changed streams and the changed mapping rule of the stream ID and the QFI.

According to various embodiments of the disclosure, the method may further include an operation of storing at least one of a mapping rule of a stream ID and a QFI, a UPF connection ID, and a gNB connection ID, based on second N2 information.

As described above, a method performed by a user plane function (UPF) entity in a wireless communication system according to various embodiments of the disclosure may include an operation of receiving an N4 session establishment request message from a session management function (SMF) entity and an operation of transmitting an N4 session establishment response message to the SMF entity in response to the N4 session establishment request message, the N4 session establishment request message may be based on an SM policy updated by the SMF entity for a QUIC connection, and the N4 session establishment response message may include a UPF connection ID.

According to various embodiments of the disclosure, when termination of a QUIC connection in a QUIC layer is indicated or an N4 session release request message is received from the SMF entity, an N4 session release response message including connection close information for the termination of the QUIC connection may be transmitted to the SMF entity, or a gNB connection ID and a UPF connection ID corresponding to the QUIC connection may be deleted to be terminated.

As described above, an SMF entity using a QUIC connection to establish a PDU session in a wireless communication system according to various embodiments of the disclosure may include a transceiver and a controller connected to the transceiver, and the controller is configured to transmit an N4 session establishment request message to a UPF entity, receive an N4 session establishment response message from the UPF entity in response to the N4 session establishment request message, transmit first N2 information based on the N4 session establishment response message to a base station through an AMF entity, receive second N2 information from the base station through the AMF entity, and perform communication by using the QUIC connection, and the first N2 information may include at least one of information on a number of streams to be included in the QUIC connection, a mapping rule of a stream ID and QFI, and a UPF connection ID.

According to various embodiments of the disclosure, when the QUIC connection is generated by the UPF entity, the N4 session establishment response message may include the UPF connection ID selected by the UPF entity and a gNB connection ID based on the QUIC connection generated by the UPF entity.

According to various embodiments of the disclosure, when the QUIC connection is generated by the base station, the N4 session establishment response message may include the UPF connection ID selected by the UPF entity, and the second N2 information may include a gNB connection ID based on the QUIC connection generated by the base station.

According to various embodiments of the disclosure, the first N2 information may include information required for handshake for generating the QUIC connection, the information required for the handshake may include at least one of Initial Information, CRYPTO, 0-RTT Information, Handshake Information, and ACK frame for communicating with the UPF entity or the base station, and the second N2 information may include handshake result information.

According to various embodiments of the disclosure, the controller may be configured to provide information indicating to use a pre-generated QUIC connection through the N4 session establishment request message, and the first N2 information may include a UPF connection ID and a gNB connection ID corresponding to the pre-generated QUIC connection.

According to various embodiments of the disclosure, one QUIC connection may be allocated to one UE, the one UQIC connection may include a plurality of streams, and the plurality of streams may correspond to different stream IDs.

According to various embodiments of the disclosure, one QUIC connection may be allocated to a plurality of UEs, the one QUIC connection may include a plurality of streams, the plurality of streams may correspond to different stream IDs, and a first stream of the plurality of streams may be allocated to a first UE and a second stream is allocated to a second UE.

According to various embodiments of the disclosure, a plurality of QUIC connections may be allocated to one UE and correspond to a plurality of streams, respectively.

According to various embodiments of the disclosure, the controller may be configured to update an SM policy by adding at least one of a mapping rule of a stream ID and a QFI, information on the operation of an N4 session, or information indicating a QUIC connection, so as to change the SM policy for the QUIC connection, and the N4 session establishment request message may be transmitted based on the updated SM policy.

According to various embodiments of the disclosure, the controller may be further configured to transmit third N2 information including at least one of information on the number of changed streams and a changed mapping rule of the stream ID and the QFI to the base station through the AMF entity and receive fourth N2 information from the base station through the AMF entity, and the third N2 information may include at least one of information on the number of changed streams and the changed mapping rule of the stream ID and the QFI.

According to various embodiments of the disclosure, the controller may be further configured to store at least one of a mapping rule of a stream ID and a QFI, a UPF connection ID, and a gNB connection ID, based on second N2 information.

As described above, a UPF entity in a wireless communication system according to various embodiments of the disclosure may include a transceiver and a controller connected to the transceiver, the controller may be configured to receive an N4 session establishment request message from an SMF entity, and transmit an N4 session establishment response message to the SMF entity in response to the N4 session establishment request message, the N4 session establishment request message may be based on an SM policy updated by the SMF entity for a QUIC connection, and the N4 session establishment response message may include a UPF connection ID.

According to various embodiments of the disclosure, when termination of a QUIC connection in a QUIC layer is indicated or an N4 session release request message is received from the SMF entity, an N4 session release response message including connection close information for the termination of the QUIC connection may be transmitted to the SMF entity, or a gNB connection ID and a UPF connection ID corresponding to the QUIC connection may be deleted to be terminated.

## Claims

1. A method of using a quick user datagram protocol internet connection (QUIC) connection to establish a PDU session by a session management function (SMF) entity in a wireless communication system, the method comprising:
transmitting an N4 session establishment request message to a user plane function (UPF) entity;
receiving an N4 session establishment response message from the UPF entity in response to the N4 session establishment request message;
transmitting first N2 information based on the N4 session establishment response message to a base station through an access and mobility management function (AMF) entity;
receiving second N2 information from the base station through the AMF entity; and
performing communication by using the QUIC connection,
wherein the first N2 information comprises at least one of information on a number of streams to be included in the QUIC connection, a mapping rule of a stream identifier (ID) and a quality of service flow identifier (QFI), and a UPF connection ID.

2. The method of claim 1, wherein, in case that the QUIC connection is generated by the UPF entity, the N4 session establishment response message comprises the UPF connection ID selected by the UPF entity and a gNB connection ID based on the QUIC connection generated by the UPF entity.

3. The method of claim 1, wherein, in case that the QUIC connection is generated by the base station, the N4 session establishment response message comprises the UPF connection ID selected by the UPF entity, and
wherein the second N2 information comprises a gNB connection ID based on the QUIC connection generated by the base station.

4. The method of claim 1, wherein the first N2 information comprises information required for handshake for generating the QUIC connection,
wherein the information required for the handshake comprises at least one of Initial Information, CRYPTO, 0-RTT Information, Handshake Information, and ACK frame for communicating with the UPF entity or the base station, and
wherein the second N2 information comprises handshake result information.

5. The method of claim 1, further comprising providing information indicating to use a pre-generated QUIC connection through the N4 session establishment request message,
wherein the first N2 information comprises a UPF connection ID and a gNB connection ID corresponding to the pre-generated QUIC connection.

6. The method of claim 1, wherein one QUIC connection is allocated to one UE,
wherein the one QUIC connection comprises a plurality of streams, and
wherein the plurality of streams correspond to different stream IDs.

7. The method of claim 1, wherein one QUIC connection is allocated to a plurality of UEs,
wherein the one QUIC connection comprises a plurality of streams,
wherein the plurality of streams correspond to different stream IDs, and
wherein a first stream of the plurality of streams is allocated to a first UE and a second stream is allocated to a second UE.

8. A session management function (SMF) entity using a quick user datagram protocol internet connection (QUIC) connection to establish a PDU session in a wireless communication system, the SMF entity comprising:
a transceiver; and
a controller connected to the transceiver,
wherein the controller is configured to:
transmit an N4 session establishment request message to a user plane function (UPF) entity;
receive an N4 session establishment response message from the UPF entity in response to the N4 session establishment request message;
transmit first N2 information based on the N4 session establishment response message to a base station through an access and mobility management function (AMF) entity;
receive second N2 information from the base station through the AMF entity; and
perform communication by using the QUIC connection,
wherein the first N2 information comprises at least one of information on a number of streams to be included in the QUIC connection, a mapping rule of a stream identifier (ID) and a quality of service flow identifier (QFI), and a UPF connection ID.

9. The SMF entity of claim 8, wherein, in case that the QUIC connection is generated by the UPF entity, the N4 session establishment response message comprises the UPF connection ID selected by the UPF entity and a gNB connection ID based on the QUIC connection generated by the UPF entity.

10. The SMF entity of claim 8, wherein, in case that the QUIC connection is generated by the base station, the N4 session establishment response message comprises the UPF connection ID selected by the UPF entity, and
wherein the second N2 information comprises a gNB connection ID based on the QUIC connection generated by the base station.

11. The SMF entity of claim 8, wherein the first N2 information comprises information required for handshake for generating the QUIC connection,
wherein the information required for the handshake comprises at least one of Initial Information, CRYPTO, 0-RTT Information, Handshake Information, and ACK frame for communicating with the UPF entity or the base station, and
wherein the second N2 information comprises handshake result information.

12. The SMF entity of claim 2, wherein the controller is configured to provide information indicating to use a pre-generated QUIC connection through the N4 session establishment request message, and
wherein the first N2 information comprises a UPF connection ID and a gNB connection ID corresponding to the pre-generated QUIC connection.

13. The SMF entity of claim 8, wherein one QUIC connection is allocated to one UE,
wherein the one QUIC connection comprises a plurality of streams, and
wherein the plurality of streams correspond to different stream IDs.

14. The SMF entity of claim 8, wherein one QUIC connection is allocated to a plurality of UEs,
wherein the one QUIC connection comprises a plurality of streams,
wherein the plurality of streams correspond to different stream IDs, and
wherein a first stream of the plurality of streams is allocated to a first UE and a second stream is allocated to a second UE.

15. A user plane function (UPF) entity in a wireless communication system, the UPF entity comprising:
a transceiver; and
a controller connected to the transceiver,
wherein the controller is configured to:
receive an N4 session establishment request message from a session management function (SMF) entity; and
transmit an N4 session establishment response message to the SMF entity in response to the N4 session establishment request message,
wherein the N4 session establishment request message is based on an SM policy updated by the SMF entity for a QUIC connection, and
wherein the N4 session establishment response message comprises a UPF connection ID.
